# EUROPEAN PATENT APPLICATION

(11) **EP 1 237 102 A1**
(43) Date of publication of application: **04.09.2002**
(21) Application number: 00974900.3
(22) Date of filing: 10.11.2000
(51) Int. Cl.: G06F 17/60

(54) **SECURITY EXCHANGE ASSISTING SYSTEM AND SECURITY EXCHANGE ASSISTING METHOD, AND COMPUTER-READABLE RECORDED MEDIUM WHERE PROGRAM IS RECORDED**

(30) Priority: 17.11.1999 JP 32633899; 14.02.2000 JP 2000035929
(71) Applicant: Ken Millennium, Inc., Tokyo 103-0027 (JP)
(72) Inventor: Morita, Ken-ichi Ken Millennium, Inc., Tokyo 103-0027 (JP)
(74) Representative: Casey, Lindsay Joseph
(86) International application number: JP0007924
(87) International publication number: WO01037157

(57) **Abstract**

Provision is made of an issue extraction unit 50 having signal software 51 to 56 based on a plurality of different extraction criteria, issues are extracted from securities information stored in a securities information storage unit 81 by using extraction criteria selected by a user, and unnecessary issues are eliminated by screening criteria input by the user so as to obtain "buy" candidate issues. Further, provision is made of a pick unit 64 having signal software 65 to 69 based on a plurality of pickup criteria and "sell" candidate issues are selected from purchased issues stored in a purchased issue storage unit 84 based on pick criteria selected by the user. A user displays "buy" candidate issues and "sell" candidate issues by a chart display unit 58 and analyzes charts to finally determine issues to trade.

## Description

### TECHNICAL FIELD

The present invention relates to a securities trading support system for supporting selling and buying of stocks and other securities and a method for the same. More particularly, it relates to a system for providing a user buying and selling securities with candidates for securities to buy and sell and a method for the same. Further, it relates to a system for supporting the buying and selling of securities integrally rather than buying to selling and selling to buying and a method for the same.

### BACKGROUND ART

In the past, as electronic securities trading services, there have been services which display share prices in real time, display share price charts, provide information of the *Kaisha Shikiho (Japan Company Handbook)* of Toyokeizai Shinposha (The Oriental Economist), provide information of newspapers or magazines on the stock market issued by various companies, or prompt users to designate issues and search through stock information by the designated issues.

In conventional electronic securities trading services or conventional securities trading support systems, there are only systems which provide stock information or information of newspapers or magazines to the users as they are, chart the information, or provide stock information of issues selected by users by non-systemized information or unorganized information.

The Japanese stock market includes for example stocks listed on the Tokyo, Osaka, Nagoya, and other securities exchanges, over-the-counter stocks registered at the Japan Securities Dealers' Association, etc. The number of these listed or registered issues has reached over 1000. For users to select issues to buy out of this enormous number of issues, just provision of share price information or newspaper and magazine information to users or provision of information for issues designated by users is not sufficient since investors do not have the free time to check that information. Users trading securities have to accurately judge the issues of securities they buy or sell themselves and the timing for the same. In conventional electronic securities trading services or securities trading support systems, there has never been a system accurately providing the users with issues which should be traded and the timing for buying or selling those issues of securities.

The present invention has as its object to obtain for example an integral system enabling accurate provision of issues which should be bought or sold and the timings for the same to users trading securities and a method for the same.

Further, the present invention has as its object to obtain for example a flexible system enabling the decision on issues to be finally bought or sold to be left to the judgement of the user and a method for the same.

Further, the present invention has as its object to obtain for example a system able to perform the series of operations from a "buy" judgement of issues to buying and a "sell" judgement of purchased issues and selling and a method for the same.

### DISCLOSURE OF THE INVENTION

The securities trading support system according to the present invention is characterized by being provided with:
an issue extraction and selection unit for receiving as input securities information of a plurality of issues, extracting from the securities information of the plurality of issues an issue having securities information matching with a predetermined extraction criteria, and presenting the extracted issue to a user to prompt the user to select an issue to buy and
an issue pick and selection unit for registering purchase information of an issue selected by said issue extraction and selection unit, picking an issue to sell from registered issues based on purchase information of the registered issues and securities information of the registered issues, and presenting the picked issue to the user to prompt the user to select an issue to sell.

The issue extraction and selection unit is provided with:
an issue extraction unit for analyzing securities information based on a predetermined extraction criteria and extracting an issue matching that extraction criteria and
a screening unit for prompting a user to input a screening criteria for screening issues and providing the user with an issue matching a screening criteria from issues extracted by the issue extraction unit.

The issue pick and selection unit is provided with:
a purchased issue storage unit for registering, managing, and storing purchase information of issues selected by said issue extraction and selection unit and
a pick unit for analyzing securities information based on a predetermined pick criteria and picking an issue matching a pick criteria from issues stored in said purchased issue storage unit.

Another securities trading support system according to the present invention characterized by being provided with:
a securities information storage unit for storing securities information of a plurality of issues,
an issue extraction unit for reading securities information stored in said securities information storage unit, analyzing the read securities information based on a predetermined plurality of different extraction criteria, and extracting an issue matching with the plurality of extraction criteria as an extracted issue to be presented to a user,
an extracted issue storage unit for storing extracted issues extracted by said issue extraction unit,
a screening unit for prompting a user to select at least one extraction criteria from said plurality of extraction criteria, prompting the user to input a screening criteria for selecting an issue to buy from said extracted issues, reading an extracted issue matching with the extraction criteria selected by the user from extracted issues stored in said extracted issue extraction unit, reading securities information of the read extracted issue from said securities information storage unit, screening the read securities information by a screening criteria input by the user, and selecting an issue matching with both the extraction criteria and screening criteria as a "buy" candidate issue of the user, and
a "buy" candidate issue storage unit for storing "buy" candidate issues selected by the screening unit and providing stored "buy" candidate issues to the user.

Another securities trading support system according to the present invention is characterized by being provided with:
a securities information storage unit for storing securities information of a plurality of issues,
a purchased issue storage unit for receiving as input, managing, and storing purchased issues which have been already bought by a user as a portfolio,
a pick unit for prompting a user to select a pick criteria from a predetermined plurality of different pick criteria, reading purchased issues input, managed, and stored as a portfolio in said purchased issue storage unit, reading securities information of the read purchased issues from the securities information storage unit, analyzing the read securities information based on the pick criteria selected by the user, and picking up an issue matching with the pick criteria as a "sell" candidate issue, and
a "sell" candidate issue storage unit for storing "sell" candidate issues picked up by the pick unit and providing stored "sell" candidate issues to the user.

Another securities trading support system according to the present invention is characterized by being provided with:
a securities information storage unit for storing securities information of a plurality of issues,
an issue extraction unit for analyzing securities information stored in said securities information storage unit based on a predetermined plurality of different extraction criteria, extracting an issue matching with the plurality of extraction criteria, and presenting it to the user as an extracted issue,
a screening unit for prompting a user to select at least one extraction criteria from said plurality of extraction criteria, prompting the user to input a screening criteria for selecting an issue to buy from said extracted issues, selecting an issue matching with the selected extraction criteria and input screening criteria from extracted issues extracted by said issue extraction unit, and displaying it to the user as a "buy" candidate issue,
a buy unit for prompting the user to select an issue to buy from "buy" candidate issues displayed by said screening unit as a "buy" issue and buying the "buy" issue,
a purchased issue storage unit for receiving as input, managing, and storing purchased issues bought by the buying unit as a portfolio,
a pick unit for prompting a user to select a pick criteria from a predetermined plurality of different pick criteria, reading purchased issues input, managed, and stored as a portfolio in said purchased issue storage unit, analyzing securities information stored in the securities information storage unit of the read purchased issues based on the pick criteria selected by the user, picking up a purchased issue matching with the pick criteria, and displaying it to the user as a "sell" candidate issue, and
a sell unit for prompting the user to select a "sell" issue to be sold from "sell" candidate issues displayed by the pick unit and selling the "sell" candidate issue selected by the user.

The issue extraction unit extracts an issue using as an extraction criteria at least one of a fluctuation in price of a security, volume, risk degree, and securities indictor.

The pick unit picks up an issue using as a pick criteria at least one of a sell target price, a rate of decline of price of the security, and a securities hold period of a purchased issue.

Another securities trading support system according to the present invention is characterized by being provided with:
a securities information storage unit for storing securities information of a plurality of issues and
a chart display unit for reading securities information from the securities information storage unit and displaying the read securities information as a chart,
the chart display unit provided with an active display unit for displaying a chart of securities information corresponding to the date and tracking movement of a cursor displayed on the chart to actively display numbers of the securities information of the date corresponding to the location the cursor is moved to.

Another securities trading support system according to the present invention is characterized by being provided with:
a securities information storage unit for storing securities information of a plurality of issues and
a chart display unit for reading securities information from the securities information storage unit and displaying the read securities information as a chart,
the chart display unit provided with a display period changing unit for displaying a chart of securities information corresponding to the date and a scroll bar and tracking scrolling of the scroll bar to change a period displayed in a display field of the same size.

Another securities trading support system according to the present invention is characterized by being provided with:
a securities information storage unit for storing securities information of a plurality of issues and
a chart display unit for reading securities information from the securities information storage unit and displaying the read securities information as a chart,
the chart display unit provided with a movement research unit for searching for movement similar to movement of a certain period of the displayed chart from other periods of the chart.

Another securities trading support system according to the present invention is characterized by being provided with:
a securities information storage unit for storing securities information of a plurality of issues and
a chart display unit for reading securities information from the securities information storage unit and displaying the read securities information as a chart,
the chart display unit provided with an overlay display unit for displaying the chart of another issue overlaid on the chart of a certain issue already displayed.

Another securities trading support system according to the present invention is characterized by being provided with:
a securities information storage unit for storing securities information of a plurality of issues and
a chart display unit for reading securities information from the securities information storage unit and displaying the read securities information as a chart,
the chart display unit provided with an indicator chart display unit using any one of at least a method of designating a period and a method of searching for a period from a chart for an already displayed chart of an issue so as to display at least one indicator chart of a volume by range of share price, margin trading assessed loss, margin share ratio, number of advancing/declining issues, advancing/declining ratio, number of new price issues, share price moving average, share price moving average divergence, ichimoku kinkou hyou, stochastic, RSI, RCI, volume ratio, point and figure, and psychological line.

The securities information storage unit further deems an indicator used for at least one of the share price index, stock market data, and economic data as one issue and stores the data of that indicator as securities information.

The securities information storage unit further deems industry-wise indexes obtained by grouping pluralities of issues of the same industries as single issues, stores the averages of the securities information of the plurality of issues grouped in the industry-wise indexes as securities information of the industry-wise indexes, deems theme-wise indexes obtained by grouping issues by themes as single issues, and stores the averages of the securities information of the plurality of issues grouped in the theme-wise indexes as securities information of the theme-wise indexes.

The securities information support system is provided with an index editing unit for adding, deleting, and changing issues grouped in the industry-wise indexes or theme-wise indexes.

Another securities trading support system according to the present invention is characterized by being provided with:
a securities information storage unit for storing securities information of a plurality of issues and
a chart display unit for reading-securities information from the securities information storage unit and displaying the read securities information as a chart,
the chart display unit displaying a chart of securities information corresponding to a date, displaying the securities information by weekly charts of week units, and displaying the securities information from the last week to the present day by daily charts of day units.

The pick unit prompts the user to select a pick criteria for picking up a "sell" candidate issue in advance and stores it in the purchased issue storage unit when the purchased issue storage unit manages and stores purchased issues.

The pick unit checks whether there is a purchased issue matching a pick criteria not selected by the user in the purchased issues and, when there is a purchased issue matching with a pick criteria not selected by the user, displays to the user the fact the purchased issue was selected by a pick criteria not selected by the user by a method separate from the method of displaying purchased issues matching pick criteria selected by the user.

The chart display unit displays data for analysis of fundamentals.

The screening unit uses a rate of change of a value dynamically changing along with the elapse of time as the screening criteria.

The screening unit uses as the screening criteria the rate of change of at least one of a share price fluctuation, share price level, recent price movement, moving average divergence, volume change, margin selling balance change, margin buying balance change, and margin share ratio.

A securities trading support method according to the present invention is characterized by:
inputting securities information of a plurality of issues, extracting from the securities information of the plurality of issues an issue having securities information matching with a predetermined extraction criteria, and presenting the extracted issue to a user to prompt the user to select an issue to buy and
registering purchase information of an issue selected by a user, picking an issue to sell from registered issues based on purchase information of the registered issues and securities information of the registered issues, and presenting the picked issue to the user to prompt the user to select an issue to sell.

Another securities trading support method according to the present invention is characterized by:
storing securities information of a plurality of issues,
reading stored securities information, analyzing the read securities information based on a predetermined plurality of different extraction criteria, and extracting an issue matching with the plurality of extraction criteria as an extracted issue to be presented to a user,
storing extracted issues extracted,
prompting a user to select at least one extraction criteria from said plurality of extraction criteria, prompting the user to input a screening criteria for selecting an issue to buy from said extracted issues, reading an extracted issue matching with the extraction criteria selected by the user from stored extracted issues, reading securities information of the read extracted issue, screening the read securities information by a screening criteria input by the user, and selecting an issue matching with both the extraction criteria and screening criteria as a "buy" candidate issue of the user, and
storing selected "buy" candidate issues and providing stored "buy" candidate issues to the user.

Another securities trading support method according to the present invention is characterized by:
storing securities information of a plurality of issues,
receiving as input, managing, and storing purchased issues which have been already bought by a user as a portfolio,
prompting a user to select a pick criteria from a predetermined plurality of different pick criteria, reading purchased issues input, managed, and stored as a portfolio, reading securities information of the read purchased issues from the stored securities information, analyzing the read securities information based on the pick criteria selected by the user, and picking up an issue matching with the pick criteria as a "sell" candidate issue, and
storing picked up "sell" candidate issues and providing stored "sell" candidate issues to the user.

Further, the present invention is characterized by being a program for making a computer execute processing of the parts of the above securities trading support system and the processing of the securities trading support method and a computer readable storage medium storing the programs.

Another computer readable storage medium according to the present invention is a securities trading support system for supporting the selection of an issue from securities information of a plurality of issues stored in a memory, characterized by:
dividing the plurality of issues into groups, finding rates of advance and rates of decline of the issues, calculating an average of the rates of advance and average of the rates of decline for each group, and storing in a memory the average of the rate of advance and average of the rate of decline as reference values,
prompting a user to select a group and prompting the user to designate a risk degree,
correcting reference values of a group selected by the user by the risk degree and storing the corrected reference values in the memory, and
screening for an issue matching with the corrected reference values from the securities information of the plurality of issues.

The groups are groups divided by size, industry, and price range.

The reference values are corrected to values smaller the larger the risk degree.

Another securities trading support system according to the present invention is a securities trading support system for supporting the selection of an issue from securities information of a plurality of issues stored in a memory,.characterized by:
changing the value of a parameter able to be used for calculating a technical indicator used for assessment of an issue within a predetermined range, calculating the value of the technical indicator and value of the assessment scope corresponding to the value of the parameter, and storing them in the memory, and
displaying on a display screen the value of the parameter used for calculation of the technical indicator and the value of the technical indicator calculated by the value of that parameter in the order of size of assessment scope.

The technical indicator is at least one of an RSI, RCI, stochastic, psychological line, and volume ratio and said parameter is a "period" used for calculation of an "index" of the technical indicator.

The assessment scope is one of profit/loss, win rate, and number of wins.

Another securities trading support system according to the present invention is a securities trading support system for supporting the selection of an issue from securities information of a plurality of issues stored in a memory, characterized by
displaying on a display screen a distribution chart having as one axis of its orthogonal system a rate of advance and as the other axis a rate of decline, calculating a rate of advance and rate of decline of each issue, and plotting marks at corresponding positions of the distribution chart using the calculated rates of advance and rates of decline.

The rate of advance is the maximum rate of advance in a plurality of rates of advance calculated for a plurality of advancing trends appearing over a certain period, and the rate of decline is the maximum rate of decline in a plurality of rates of decline calculated for a plurality of declining trends appearing over a certain period.

The system selects a mark on the distribution chart displayed on the display screen to display on the display screen securities information of an issue having a rate of advance and rate of decline corresponding to that mark.

### BRIEF DESCRIPTION OF THE DRAWINGS

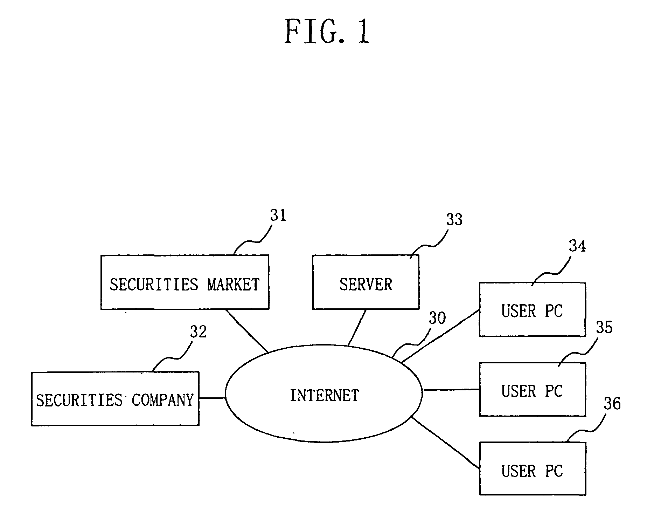

FIG. 1 is an overview of a securities trading support system.
FIG. 2 is a view of the hardware configuration of a server 33.
FIG. 3 is a schematic view of the system flow of the server 33.
FIG. 4 is a view of the file format of a securities information storage unit 81.
FIG. 5 is a view of the file format of an extracted issue storage unit 8.
FIG. 6 is a view of a screening screen.
FIG. 7 is a view of the file format of a "buy" candidate issue storage unit.
FIG. 8 is a view of a screening result screen.
FIG. 9 is a chart of a share price.
FIG. 10 is a view of the file format of a purchased issue storage unit 84.
FIG. 11 is a view of a pickup screen.
FIG. 12 is a view of the file format of a "sell" candidate issue storage unit 85.
FIG. 13 is a view of a pickup result screen.
FIG. 14 is a view explaining the operation of an active display unit 71.
FIG. 15 is a view explaining the operation of the active display unit 71.
FIG. 16 is a view explaining the operation of a display period changing unit 72.
FIG. 17 is a view explaining the operation of the display period changing unit 72.
FIG. 18 is a view explaining the operation of the display period changing unit 72.
FIG. 19 is a view explaining the operation of an overlay display unit 73.
FIG. 20 is a view explaining the operation of a movement research unit 74.
FIG. 21 is a view explaining the operation of the movement research unit 74.
FIG. 22 is a view explaining the operation of an indicator chart display unit 75.
FIG. 23 is a view explaining the operation of the indicator chart display unit 75.
FIG. 24 is a view explaining the operation of the indicator chart display unit 75.
FIG. 25 is a view explaining the operation of the indicator chart display unit 75.
FIG. 26 is a view explaining the operation of the indicator chart display unit 75.
FIG. 27 is a view explaining the operation of the indicator chart display unit 75.
FIG. 28 is a view explaining the operation of the indicator chart display unit 75.
FIG. 29 is a view explaining the operation of the indicator chart display unit 75.
FIG. 30 is a view explaining the operation of the indicator chart display unit 75.
FIG. 31 is a view explaining the operation of the indicator chart display unit 75.
FIG. 32 is a view explaining the operation of the indicator chart display unit 75.
FIG. 33 is a view explaining the operation of the indicator chart display unit 75.
FIG. 34 is a view explaining the operation of the indicator chart display unit 75.
FIG. 35 is a view explaining the operation of the indicator chart display unit 75.
FIG. 36 is a view explaining the operation of the indicator chart display unit 75.
FIG. 37 is a view explaining the operation of the indicator chart display unit 75.
FIG. 38 is a view of a share price index and stock data stored by a securities information storage unit 81.
FIG. 39 is a view of economic data stored by the securities information storage unit 81.
FIG. 40 is a view of individual issue data and industry-wise indexes stored by the securities information storage unit 81.
FIG. 41 is a view of theme-wise indexes stored by the securities information storage unit 81.
FIG. 42 is a view of an index list screen provided by a data provision unit 77.
FIG. 43 is a view of the operation of an index editing unit 78.
FIG. 44 is a view of an issue extraction and selection unit 200 of a second embodiment.
FIG. 45 is a view of a screening screen of a static screening unit 211.
FIG. 46 is a view of a screening screen of a dynamic screening unit 212.
FIG. 47 is a view of a screening screen of a performance screening unit 213.
FIG. 48 is a view of a screening screen of a third embodiment.
FIG. 49 is a view of an issue screening screen for selecting a reference value.
FIG. 50 is a view of an optimal indicator search screen of a fourth embodiment.
FIG. 51 is a view of an index distribution screen of a fifth embodiment.

### BEST MODE FOR WORKING THE INVENTION

### First Embodiment

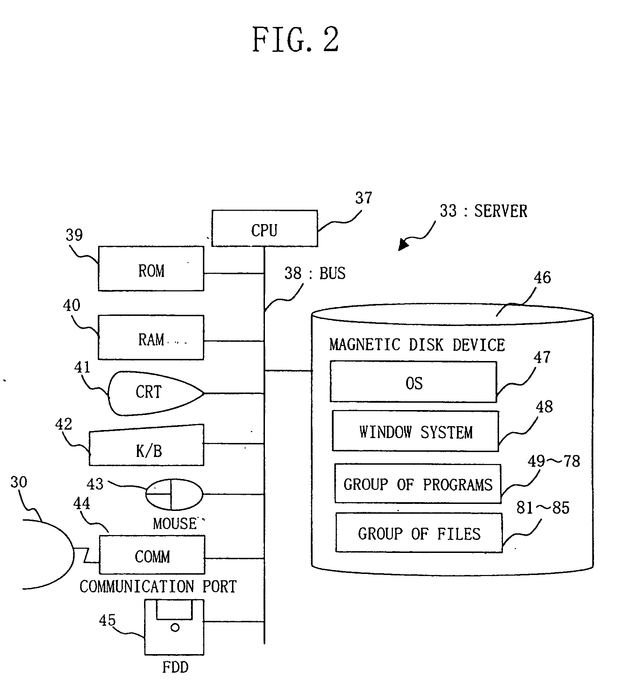

FIG. 2 is a view of the overall configuration of a securities trading support system.

The server 33 is connected to the Internet 30 and accessed by a plurality of users (user PCs 34 to 36). Further, the server 33 obtains daily securities information from a securities market 31, stores it in the server 33, and provides it to the user. Further, the server 33 requests the buying and selling of issues decided to a securities company 32 based on a decision of the user.

FIG. 2 is a view of the hardware configuration of the server 33.

The CPU 37 is comprised of a ROM 39, RAM 40, CRT display device 41, keyboard (K/B) 42, mouse 43, communication port 44, FDD 45, and magnetic disk device 46 connected through a bus 38. The magnetic disk device 46 stores an operating system (OS) 47, window system 48, the following group of programs (49 to 78), and the group of files (81 to 85). The group of programs is executed by the CPU 37, OS 47, and window system 48 and exhibits the functions described below.

The hardware configuration from the user PC 34 to the user PC 36 is similar to FIG. 2 (however, the content of the group of programs and group of files stored in the magnetic disk device 46 differ).

In the following explanation, "store" means store data in the RAM 40 or FDD 45 or magnetic disk device 46. Further, in the following explanation, "input" means to input data using the K/B 42 or mouse 43.

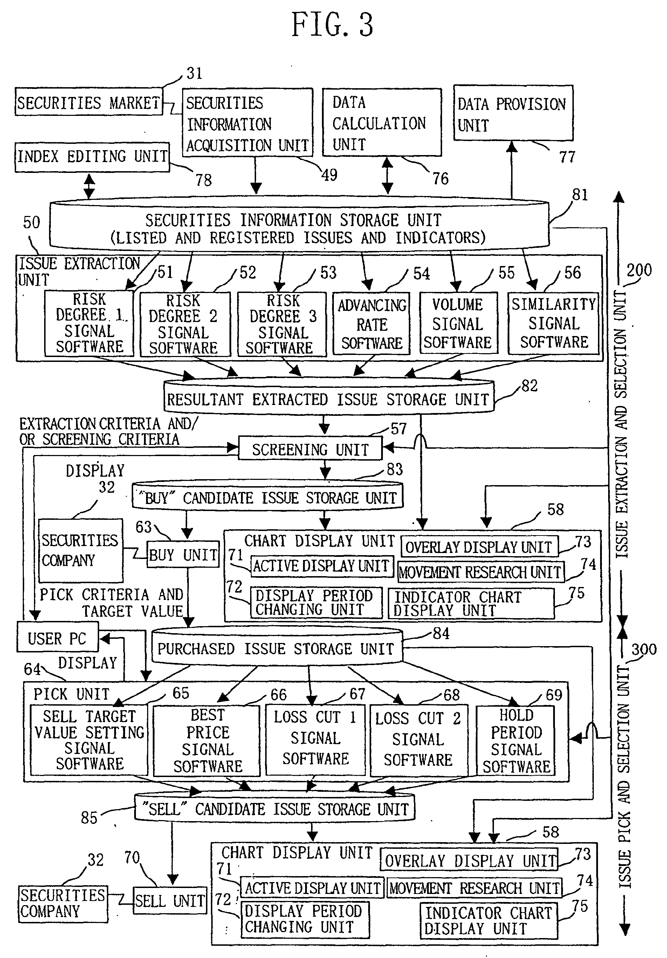

FIG. 3 is a schematic view of the system flow of mainly the server 33 of the securities trading support system.

The securities trading support system shown in FIG. 3, roughly divided, is configured by an issue extraction and selection unit 200 and issue pick and selection unit 300.

The issue extraction and selection unit 200 receives as input securities information of a plurality of issues, extracts issues having securities information matching with a predetermined extraction criteria from the securities information of the plurality of issues, shows the extracted issues to the user, and prompts the user to select the issues to be purchased. Further, the issue pick and selection unit 300 registers the purchase information of the issues selected by the issue extraction and selection unit, picks the issues for sale from the registered issues based on the registered purchase information of the issues and the registered securities information of the issues, shows the picked issues to the user, and prompts the user to select the issues to sell.

The securities trading support system of this embodiment is characterized by having the issue extraction and selection unit 200 select the issues for the user to buy and having the issue pick and selection unit 300 decide on the issues for the user to sell. The issue extraction and selection unit 200 supports the purchase of issues by the user by provision of the issue extraction unit 50, screening unit 57, and buy unit 63. Further, the issue pick and selection unit 300 manages the issues and supports sales of the user by provision of the purchased issue storage unit 84, pick unit 64, and sale unit 70. That is, the system provides support combining the two tasks of buying and selling issues of the user. That is, the point of being a system managing issues handled by a user from purchase to sale is a large feature. Next, the explanation will be made of details of the parts of the system based on FIG. 3.

The securities information acquisition unit 49 acquires the trading results of the securities market 32 every half day and stores it in the securities information storage unit 81. The securities information storage unit 81 stores information of all issues listed on the stock market and all issues registered on the over-the-counter market.

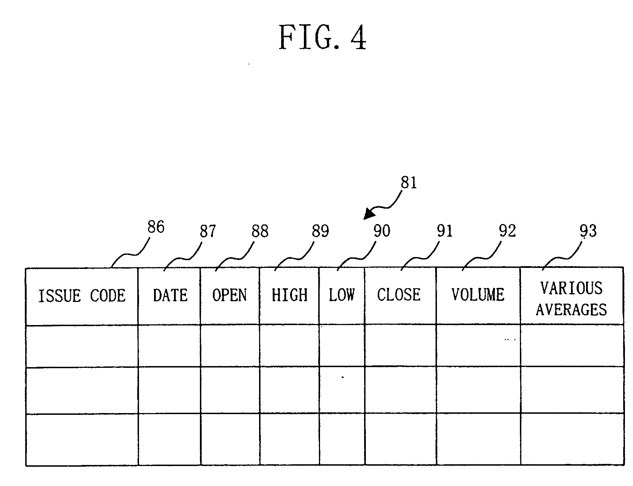

FIG. 4 is a view of the file format of the securities information storage unit 81.

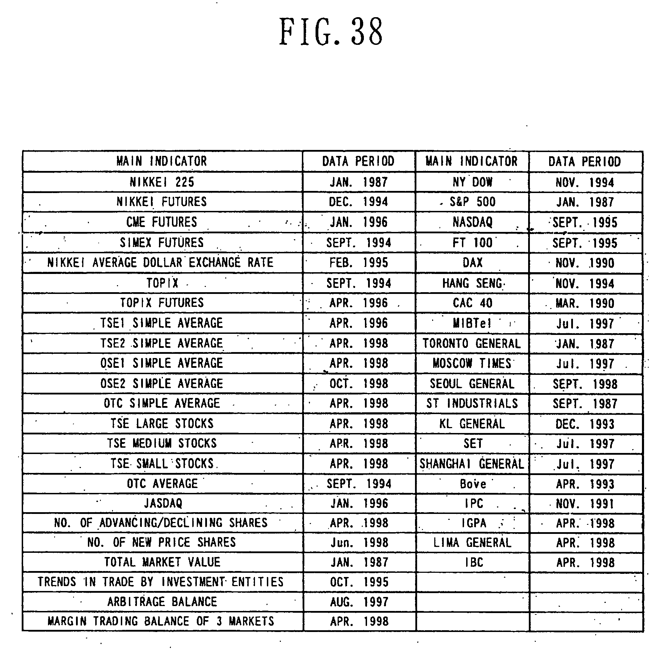

The values of the issue code 86, date 87, open 88, high 89, low 90, close 91, and volume 92 of the securities information storage unit 81 are values acquired by the securities information acquisition unit 49 from the securities market 31. The securities information storage unit 81 stores the data for the past 20 years for all issues. Further, it calculates the various types of averages 83 such as the moving averages for the past 25 days, 75 days, and 200 days by a data calculation unit 76 and stores the calculated values. Further, the securities information storage unit 81, which will be explained in detail later, stores the various types of share price indexes, stock market data, data used as economic data, industry-wise indexes, theme-wise index data as shown in FIG. 38, FIG. 39, FIG. 40, and FIG. 41. The data is provided by a data provision unit 77 to the user.

The issue extraction unit 50 reads the securities information stored in the securities information storage unit 81 and extracts issues based on a plurality of extraction software having six types of different extraction criteria. That is, the issue extraction unit 50 is an assembly of a plurality of extraction software programs. Below, the various extraction software in the issue extraction unit 50 will be explained.

### Regarding Risk Degree 1 Signal Software 51

This software is software for extracting issues by the least risk degree. The extraction criteria for extracting the issues of the software are the toughest. For example, it is designed so that if the stock market is not adjusted in four to six months or more, the signal will not light up. In this software, when a "buy" signal lights up for a certain issue, it is assumed that there is no "scam" (a market price which declines after being made to appear to advance or advance after being made to appear to decline). The "buy" signal for an issue by this software lights up for example once or twice or so a year.

### Regarding Risk Degree 2 Signal Software

The "buy" signal by the risk degree 1 signal software 51 lights up once or twice or so a year. The risk degree 2 signal software 52 eases the preconditions over the risk degree 1 signal software and lowers the level of the extraction criteria. For example, the "buy" signal lights up once or twice or so a month.

### Regarding Risk Degree 3 Signal Software

This software lights up the "buy" signal for two or three issues a day for example for institutional investors or day traders making frequent investments. The software lowers the level of the extraction criteria further from the risk degree 2 signal software 52 and enables more issues to be extracted.

The three above softwares using risk degrees are based on an algorithm for extracting bottom price issues. For example, they refer to the most recent highs and most recent lows of the share prices, judge the bottom prices, judge that the market price is advancing when the share price enters an advancing trend, and light up the "buy" signal.

### Regarding Advancing Rate Signal Software 54

The advancing rate signal software 54 judges the movement in a share price, that is, the rate of advance of the share price, to light up the signal. Further, it combines various indicators together with the rate of advance. The advancing rate signal software 54 lights up the "buy" signal when a share price advances slightly from the bottom of the share price.

### Regarding Volume Signal Software 55

This software judges the volume of an issue. It may also judge the volume of an issue combined with the share price indicator. If the cause of the increase of the volume is the market, the share price will later advance with an extremely high probability.

### Regarding Similarity Signal Software 56

This software extracts an issue having a pattern of movement (movement) similar to that of the share price of an issue with an advancing share price. By finding an issue having a similar movement of the share price, it is possible to predict the future share price of a similar issue.

Further, while not shown in FIG. 3, it is also possible to add to the issue extraction unit 50 software for judging expensive or bargain share prices to extract issues, use a unique investment judgement algorithm to extract issues, or use the profit rate, number of trades, profit margin, or other indicators to extract issues.

This issue extraction unit 50 is characterized in that it has a plurality of signal software and in that each signal software uses different extraction criteria to select issues matching with the extraction criteria from the securities information storage unit 81. The issues extracted by these plurality of signal software are stored in the extracted issue storage unit 82.

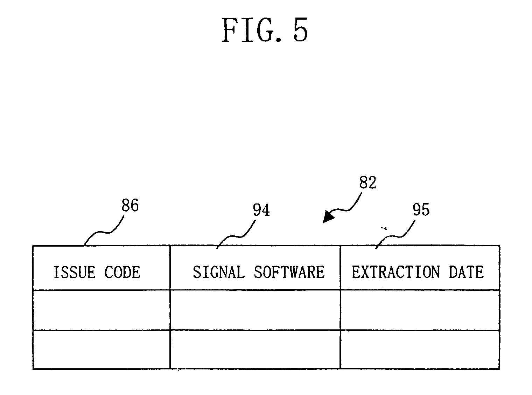

FIG. 5 is a view of the file format of the extracted issue storage unit 82.

The extracted issue storage unit 82 includes issue codes 86, signal software 94, and extraction dates 95. The extracted issue storage unit 82 stores what date an extracted issue was extracted by what signal software.

The screening unit 57 is software for selecting a "buy" candidate issue matching with the preferences of a user from the extracted issues stored in the extracted issue storage unit 82.

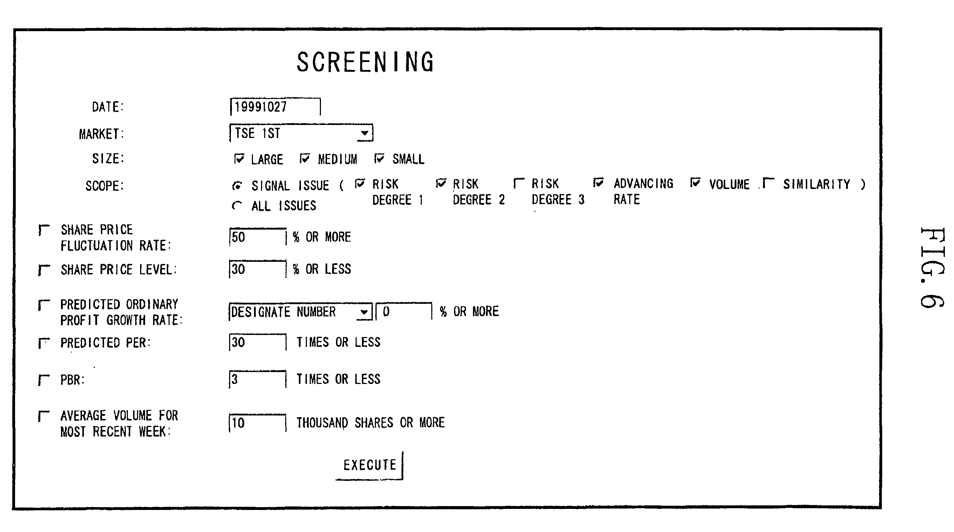

FIG. 6 shows a screening screen prepared in a home page provided by a server 33 or a user PC. The screening unit 57 displays the screen shown in FIG. 6 to the user. The user selects and inputs the "date", "market", and "size". Further, the user selects at least one signal software from the six types of signal software in the above-mentioned issue extraction unit 50 as the "scope" which the screening unit 57 is to screen. Alternatively, it may select all issues as the "scope". The user sets extraction criteria for the six types of signal software in the issue extraction unit 50 in advance and selects at least one of the signal software matching its own trading. Which to select is the responsibility of the user. Further, the user inputs values which the user desires to screen for in the input fields of the "share price fluctuation", "share price level", "predicted ordinary profit growth", "predicted PER", "PBR", and "recent 1 week average volume". Which value to input into which input field is the responsibility of the user. The screening unit 57 reads from the securities information storage unit 81 the securities information of the extracted issues extracted by the signal software selected by the user in the extracted issues stored in the extracted issue storage unit 82 using these values input by the user as the screening criteria and stores the issues matching the screening criteria as the "buy" candidate issues in the "buy" candidate issue storage unit 83.

The user can narrow down issues by a combination of selection of the signal software and input of the screening criteria by the screening unit 57. If the user does not input values in a certain input field of the screening criteria, the screening unit 57 selects the issues assuming that the screening criteria for the item of that input field is the "entire range". Further, if the user does not input values in any of the input fields of the screening criteria, the screening unit 57 selects the issues by only the selected signal software.

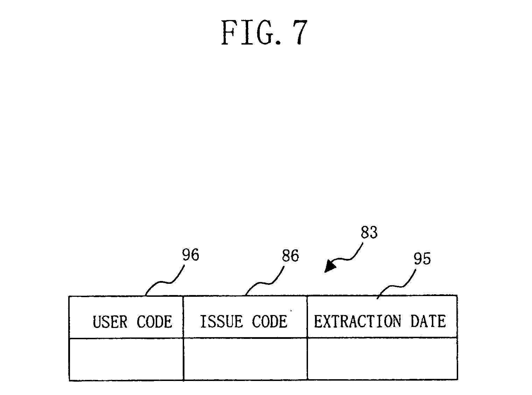

FIG. 7 shows the file format of the "buy" candidate issue storage unit 83.

The "buy" candidate issue storage unit 83 includes user codes 96, issue codes 86, and extraction dates 95. The user code 96 is an identifier assigned to each user (user PC 34, user PC 35, and user PC 36). The user code 96 enables storage of which user selected which issue as a "buy" candidate issue.

Note that the "buy" candidate issue storage unit 83 may also be in the user PC.

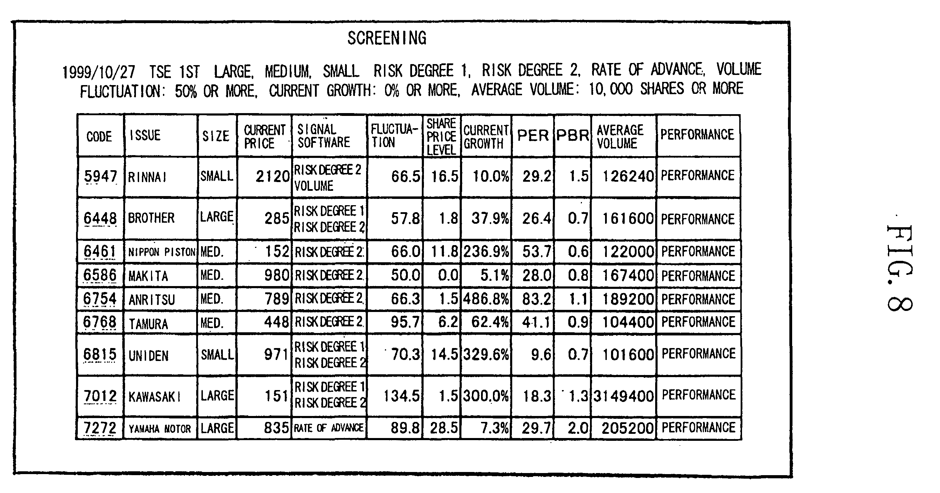

FIG. 8 shows the screening result display screen which the screening unit 57 displays to the user.

The screening result display screen searches through the extracted issue storage unit 82 and the securities information storage unit 81 using the issue codes 86 of the "buy" candidate issue storage unit 83 as a key and displays the obtained information in a tabular format.

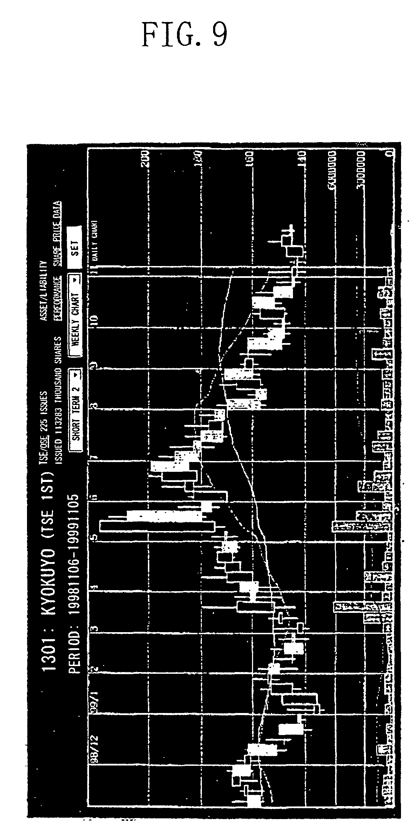

The chart display unit 58 displays for example the share price chart such as shown in FIG. 9. The chart shown in FIG. 9 displays the share price by a candlestick chart (other than candlestick chart, may also be other mode of display such as a stop chart, bar chart, anchor chart, and line chart). Further, the volume is shown by a bar graph in the order of date. Further, the 13 week average and 26 week average are shown by line graphs. The chart display unit 58 is for example shown by clicking on the issue code at the left end of the screening result screen shown in FIG. 8. The user can make a final judgement over whether issues should be bought by displaying charts of issues which have become "buy" candidate issues. The characteristic point of the share price chart shown in FIG. 9 is that a single chart shows the weekly chart and daily charts after the display of the weekly chart. FIG. 9 shows four days' worth of daily charts from November 8 (Monday), 1999 to November 11 (Thursday), 1999 after the weekly chart for the first week in November up to November 5 (Friday), 1999 (final weekly chart).

With the conventional chart display by the weekly chart, it is not possible to determine a share price in the middle of the week. By displaying the share price by a weekly chart in weekly units and displaying the share price from the following Monday of the last week to the present day by daily charts of daily units, the user can determine the share price from the start of the week to the present day and after learning of the share price on the present day can make a final judgement as to if an issue should be bought.

Note that when displaying the monthly chart, it is also possible to display weekly charts and daily charts after the monthly chart.

Note that the chart display unit 58 includes software for the active display unit 71 to the indicator chart display unit 75. Details of this software will be explained later.

The buy unit 63 is software which prompts the user to select issues to buy from the "buy" candidate issues stored in the "buy" candidate issue storage unit 83 and applies to the securities company 32 for the selected purchased issues. The buy unit 63 obtains the purchase results from the securities company 32 and stores information relating to the purchased issues as the portfolio of the user.

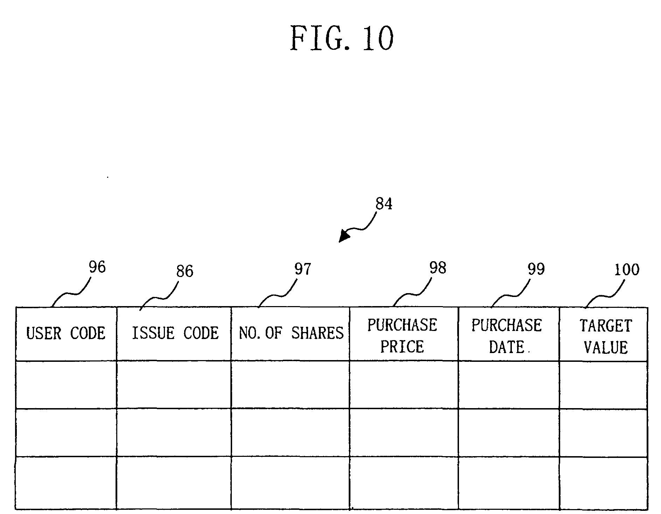

FIG. 10 shows the file format of the purchased issue storage unit 84.

The purchased issue storage unit 84 includes user codes 96, issue codes 86, numbers of shares 97, purchase prices 98, purchase dates 99, and target prices 100. The purchased issue storage unit 84 manages and stores which users bought which issues when and for how much. The target price 100 of the purchased issue storage unit 84 is the target price for sale. The target price 100 is the price which the user inputs at the time of purchase or after purchase.

The buy unit 63 is not essential for this system. When there is no buy unit 63, the portfolio stored in the purchased issue storage unit 84 is input from the user PC. Further, even when there is a buy unit 63, the portfolio stored in the purchased issued storage unit 84 may be made to be additionally input from the user.

Note that the purchased issue storage unit 84 may also be a user PC.

The pick unit 64 is provided with five signal software based on the five types of pick criteria. That is, the pick unit 64 is an assembly of five software programs. The pick unit 64 picks up the issues which should be sold based on a plurality of different pick criteria from the purchased issues as "sell" candidates. The signal software will be explained below.

### Regarding Sell Target Price Setting Signal Software 65

This software issues "sell" signals based on the target prices 100 of the purchased issue storage unit 84. When a share price reaches the target price 100 or more, it lights up the "sell" signal.

### Regarding Best Price Signal Software 66

The best price signal software 66 is designed not to issue a "sell" signal before reaching the maximum price when a share is advancing in direction. That is, it is designed to enable the maximum price to be obtained (best price). Specifically, the best price signal software 66 issues a "sell" signal when the share price advances by 30% or more from the purchase price of the purchased issue and then declines by a certain rate or more. An issue with an advancing share price has a distinctive nature. Based on its nature that the share price will only decline by less than a certain rate while advancing, the software is designed not to issue a "sell" signal unless the price declines by more than a certain rate.

### Regarding Loss Cut 1 Signal Software 67

The loss cut 1 signal software 67 uses the high after purchase as a criteria rather than the purchase price and lights up the "sell" signal when the share price declines from the high after purchasing. For example, seen from past statistics, when the probability of the share price declining more than 20% from when the "sell" signal lights up is more than 80%, the software lights up the "sell" signal.

### Regarding Loss Cut 2 Signal Software 68

The loss cut 2 signal software 68 lowers the level of the pick criteria from the loss cut 1 signal software 67 to pick up "sell" candidates.

### Regarding Hold Period Signal Software 69

The hold period signal software 69 picks up issues whose share price have not changed by a large extent for a certain period after purchase. Since the fund efficiency becomes poor when a certain issue continues to be held for a long period, an issue must be sold once and changed to another issue. The hold period signal software 69 lights up the "sell" signal when the signal is not lit up by the above four signal software within 20 days from the purchase date. The hold period signal software 69 lights up the "sell" signal based on the thinking that it is necessary to sell useless issues once in order to raise the fund efficiency.

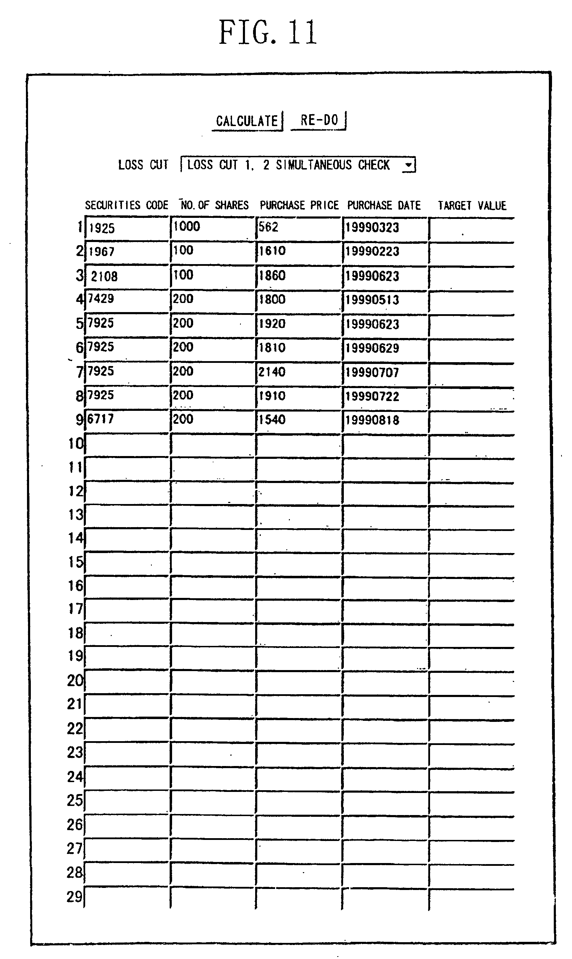

FIG. 11 shows the pickup screen which the pick unit 64 displays to a user. This pickup screen is displayed at the time that the user makes a purchase.

This screen displays the purchase information managed and stored as the portfolio in the purchased issue storage unit 84. Further, the target price 100 is displayed if a target price was input by the user. The user knows of the pick criteria of the above-mentioned five signal software in advance and selects the pick criteria matching with itself from the five types of pick criteria (five signal software). That is, it selects and designates at least one software from the above mentioned five signal softwares in the "loss cut" input field of the screen. This designation is performed at the time of purchase. That is, the user uses the pickup screen to select, input, and determine the method of selling (pick criteria) in advance at the time of purchase. The pick unit 64 starts up at least one of the signal software designated in the "loss cut" input field periodically or upon a request from the user and analyzes the securities information stored in the securities information storage unit 81 so as to extract the issues matching the pick criteria set in all signal software. Further, it stores the extracted issues in the "sell" candidate issue storage unit 85 as "sell" candidate issues.

Note that this pickup screen is displayed at any time upon the request of the user. The user can change the method of selling (pick criteria) at any time.

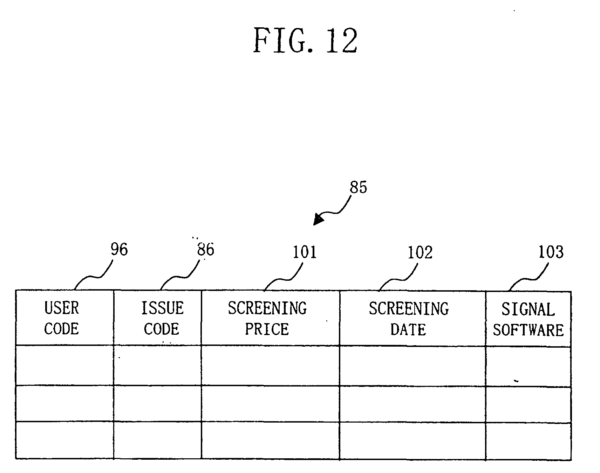

FIG. 12 shows the file format of the "sell" candidate issue storage unit 85.

The "sell" candidate issue storage unit 85 includes user codes 96, issue codes 86, screening prices 101, screening dates 102, and signal software 103. The signal software 103 is signal software picking up the issues. The screening price 101 is the share price when the signal software 103 picks up an issue. The screening date 102 is the date when the signal software 103 picks up the issue.

Note that the "sell" candidate issue storage unit 85 may also be in the user PC.

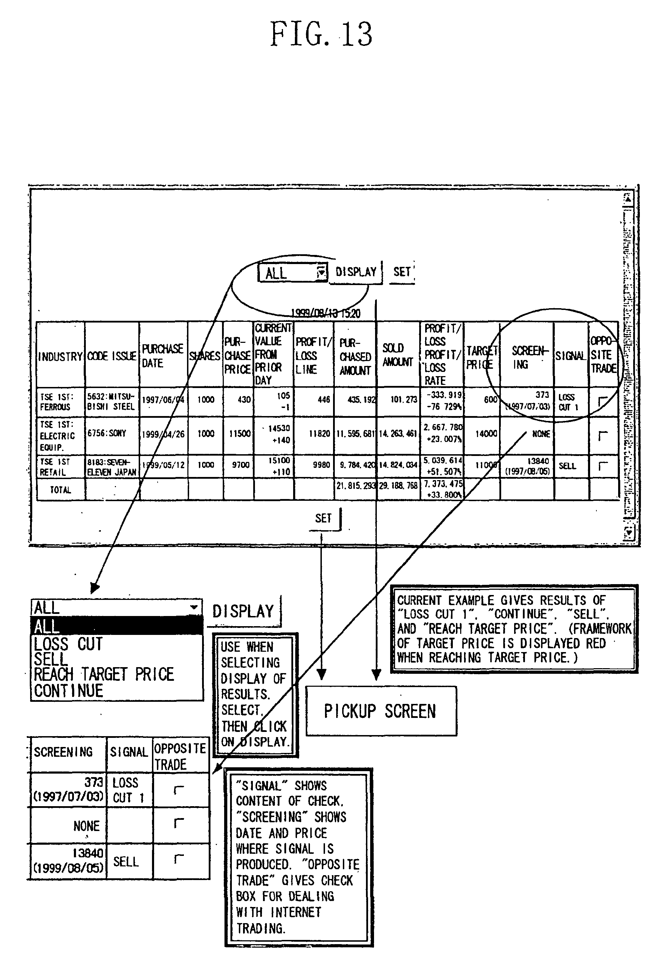

FIG. 13 shows the pickup result screen which the pick unit 64 displays to the user. If also matching the selling methods (pick criteria) not selected by the user, the screen displays them all. If matching with the selling method determined by the user (pick criteria), the screen displays this by red letters. For example, when the user has selected only the loss cut 1 signal software 67 as the pick criteria, the screen displays the first issue in FIG. 13 as having been picked up by the loss cut 1 signal software 67 and shows "loss cut 1" of the "signal" field in red letters. It shows that the second issue has not yet been picked up by any signal software (the issue is to "continue" to be held). Further, it shows the third issue has been picked up by the hold period signal software 69. Since a selling method (pick criteria) not selected by the user is matched with, it shows "sell" in the "signal field" in black letters.

If the "set" button on the pickup result screen shown in FIG. 13 is clicked on, the pickup screen shown in FIG. 11 can be displayed and the selling method (pick criteria) can be reselected.

The chart display unit 58 displays charts of the "sell" candidate issues stored in the "sell" candidate issue storage unit 85 and is the same as the chart display unit 58 displaying the charts of the "buy" candidate issues stored in the "buy" candidate issue storage unit 83. The user can display a chart by the chart display unit 58 and confirm a sell issue to sell in the "sell" candidate issues. The sell unit 70 prompts the user to select a sell issue from the "sell" candidate issues stored in the "sell" candidate issue storage unit 85, contacts the securities company 32 with the selected sell issue, and sells it,. The sell unit 70 is not essential in this system. It is also possible to perform the operation of the sell unit 70 with an actual person by telephone or manually.

Next, the chart display unit 58 will be explained.

The chart display unit 58 provides data to the user for both fundamental analysis and technical analysis. Fundamental analysis is analysis based mainly on the idea that "there is some real value in stocks and share prices fluctuate in accordance with the changes in the real value". It is an analytical technique based on the idea of how to set the real value of stocks. Technical analysis is analysis based mainly on the idea that "the share price is not a reflection of the real value of a company itself, but fluctuates due to the psychology of the investors regarding good and bad news including the same". It is an analytical technique based on the idea that the future can be predicted by the trends in share prices, the direction of the market, market statistics, etc.

The chart display unit 58 is software displaying the share price chart shown in FIG. 9, but below the explanation will be made of the active display unit 71 to the indicator chart display unit 75 included in the chart display unit 58 shown in FIG. 3.

### Regarding Active Display Unit 71

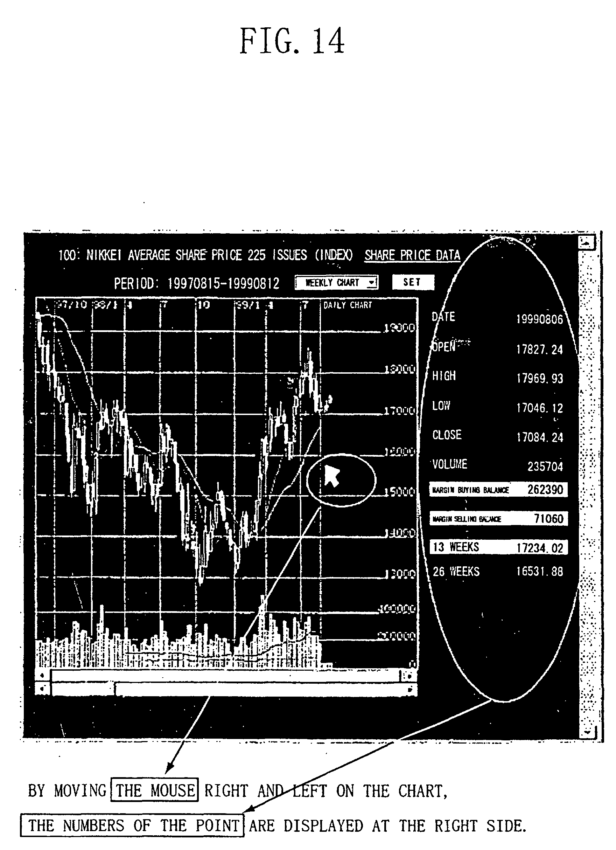

As shown in FIG. 14, by moving the cursor (mouse) shown by the arrow mark to the left or right on the chart, the active display unit 71 displays the numbers of the securities information of the date to which the arrow is moved to at the right side of the chart. The numbers are changed in real time tracking the movement of the cursor.

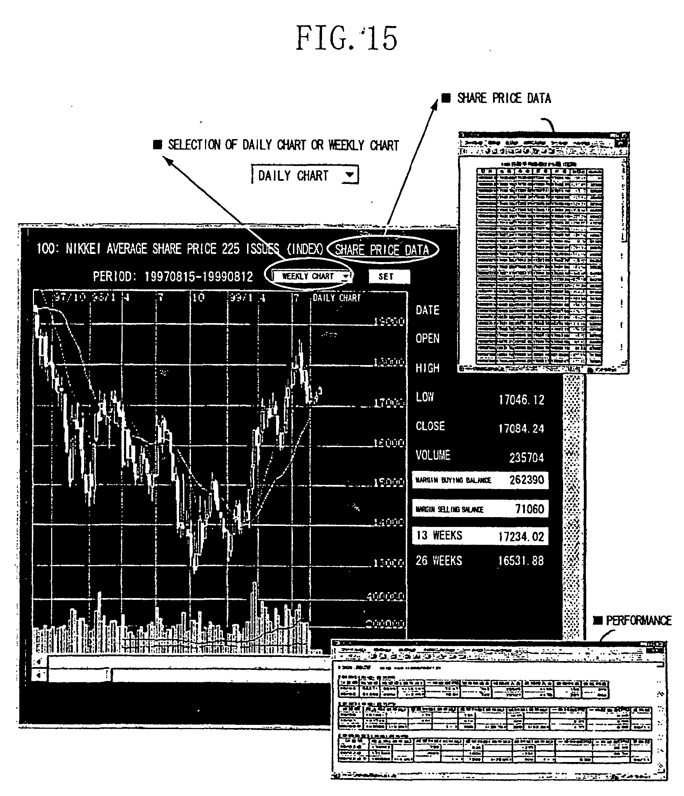

Further, as shown in FIG. 15, it is possible to change the units of display of the chart by selecting a daily chart, weekly chart, or monthly chart. Further, by clicking on the buttons of the "share price data" and the "performance" displayed at the side of "share price data" (not shown in FIG. 15. For example, the same in right field of FIG. 8), it is possible to display the share price data and performance of an issue in a separate window. By displaying the share price data and performance, the user can analyze the fundamentals. The "share price data" shows the open, high, low, close, comparison with the previous month, volume, margin selling balance, margin buying balance, and other numbers in order of date for exactly the most recent month. "Performance" displays the share price, financial figures, settlement figures, and consolidated settlement figures of an issue.

### Regarding Display Period Changing Unit 72

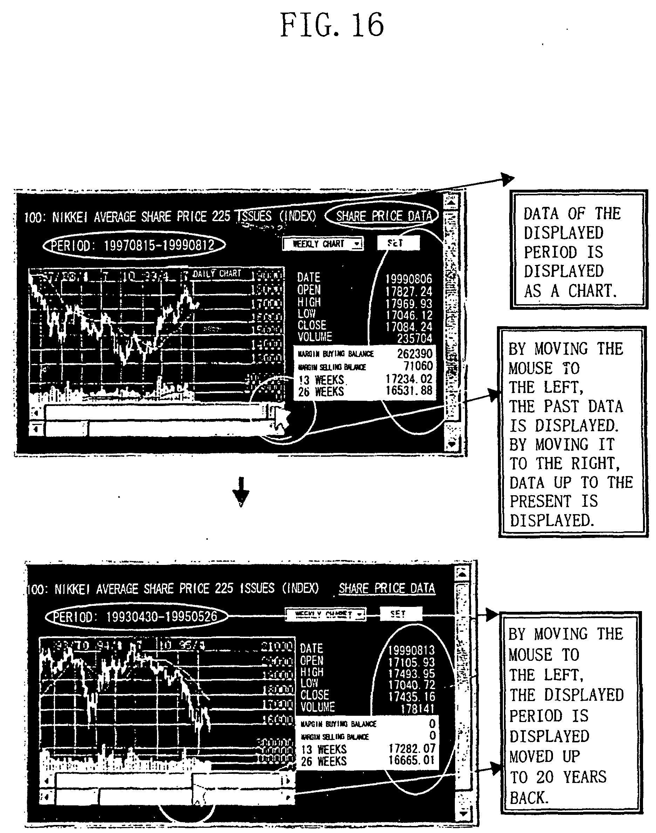

As shown in FIG. 16, there is a "period" input field above the chart. By the user inputting a period there, it is possible to designate the period to display.

Further, as shown in FIG. 16, two scroll bars are displayed below the chart. By scrolling on the upper scroll bar, it is possible to move (slide) the period displayed on the chart to the left and right.

By scrolling on the scroll bar in this way, it is possible to search for a specific period from the chart. This method is effective when the user does not know a specific period and cannot input a period into the input field of the "period". For example, it is effective when not knowing the period, but searching for the movement of a specific chart.

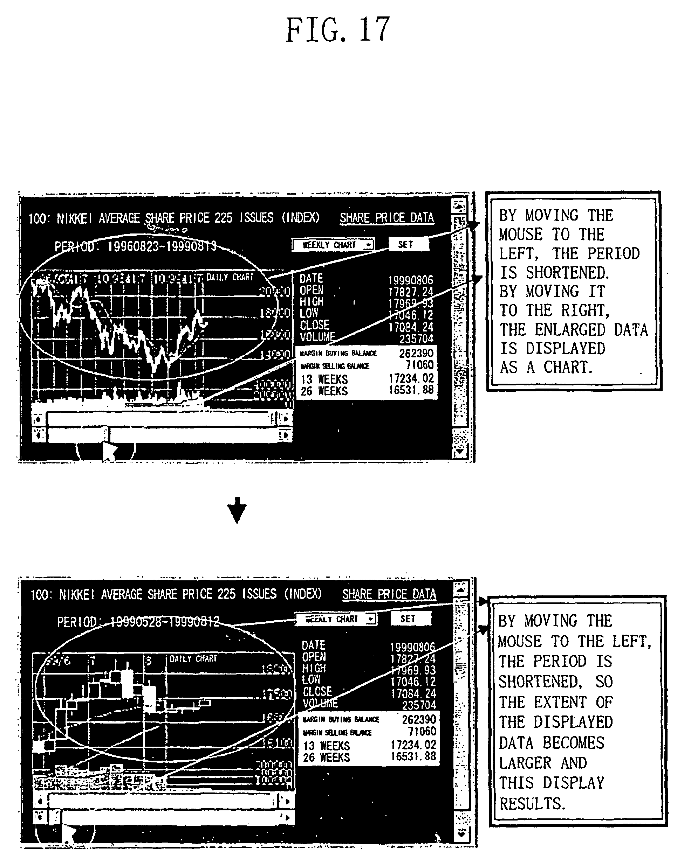

Further, as shown in FIG. 17, by scrolling on the lower scroll bar, it is possible to change the period displayed on the chart. If the bar is moved to the left by the mouse, the period displayed is shortened and a chart of a short period is displayed. If the bar is moved to the right, the period is enlarged. Data of a maximum of 20 years is displayed as a chart.

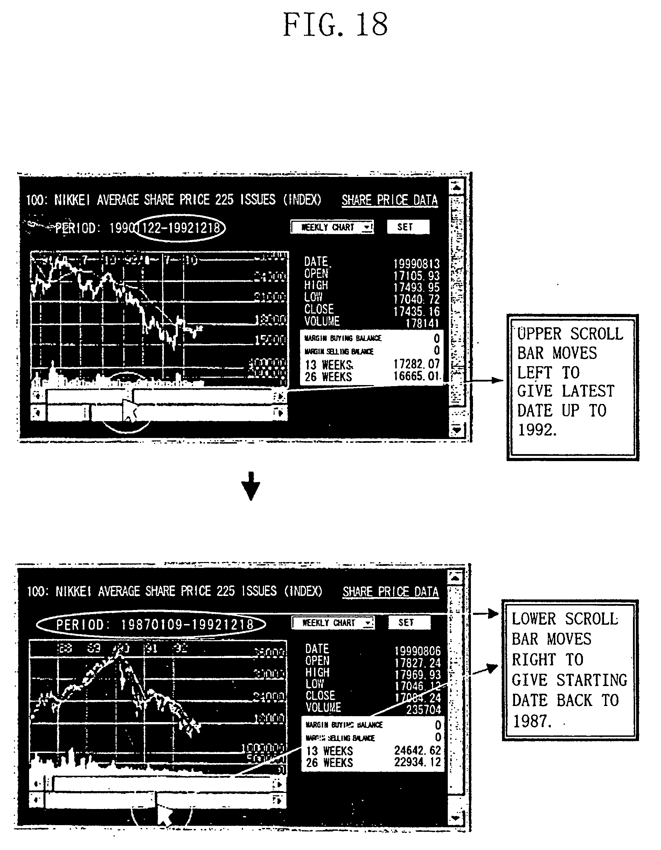

FIG. 18 shows a method of operation in the case of displaying a chart from 1987 to 1992.

First, the upper scroll bar is used to move (slide) the data so that the latest date becomes 1992 while not changing the period. Next, the lower scroll bar is used to change the period. For example, the bar is moved to the right until the starting date displayed on the chart becomes 1987.

In this way, the user can immediately and easily view the chart for a changed period.

The input of the "period" and the sliding or change of the period by the two scroll bars are effective even during operation of the following parts.

### Regarding Overlay Display Unit 73

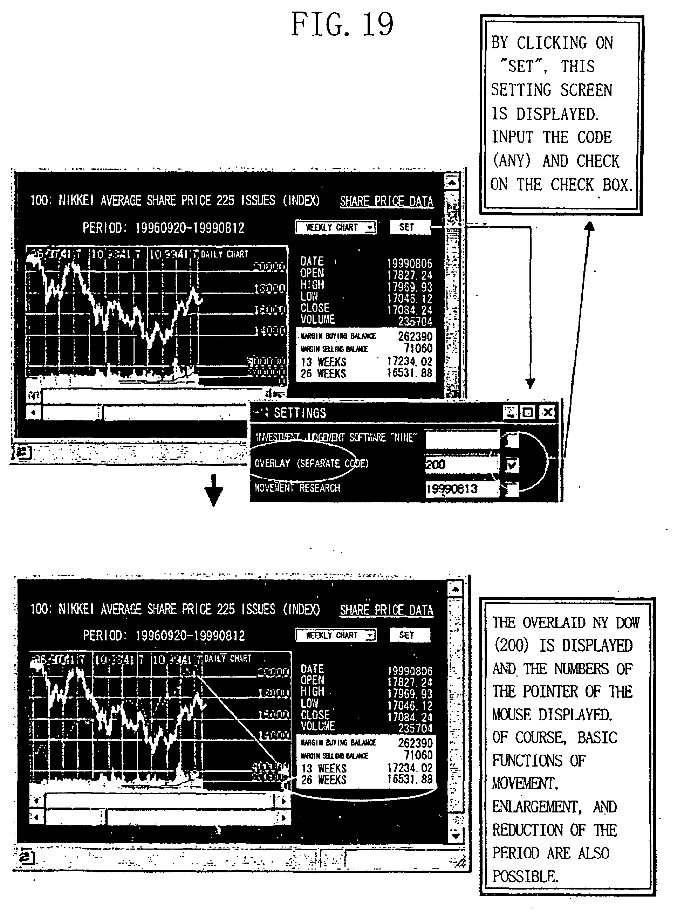

As shown in FIG. 19, the overlay display unit 73 displays a chart of a separate issue overlaid on an already displayed chart. By clicking on the "set" button of the screen, inputting the issue code in the "overlay (separate code)" field on the setting screen, and checking the check box, the chart of the issue code designated in the "overlay (separate code)" field is displayed overlaid on the already displayed chart. The two above-mentioned scroll bars function effectively even when the charts are overlaid.

### Regarding Movement Research Unit 74

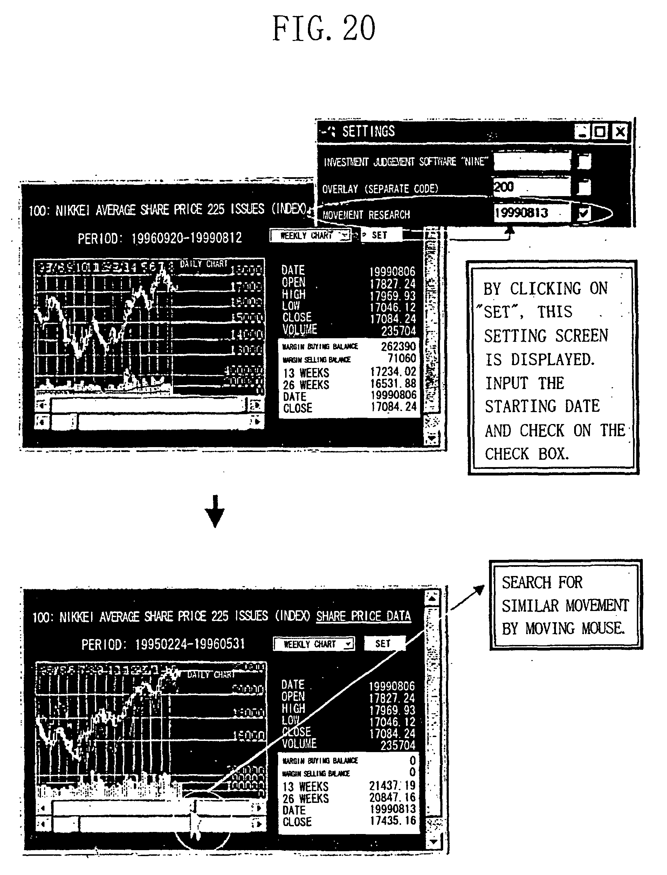

As shown in FIG. 20, the movement research unit 74 is a tool for finding a section of a pattern of the same pattern as a certain section of the chart. Movement of a chart tends to repeat past movement, so this is software for finding a pattern of movement similar to past movement. Further, when finding a similar movement, it holds the chart, calculates the past tendencies, and displays the predicted share price. Further, it is possible to display the predicted share price and predicted line.

As shown in FIG. 20, by pushing the "set" button of the screen, inputting the starting date (August 13, 1999) of the movement in the "movement research" field of the setting screen, and checking the check box, the unit displays the chart from the starting date and selects the pattern of the displayed period (May 1998 to August 1999) (screen at top of FIG. 20). By scrolling on the upper scroll bar while holding and displaying the selected pattern on the chart, it is possible to move the chart to the left or right and visually search whether a pattern is the same as the held pattern. The bottom screen of FIG. 20 shows the case of searching for a period similar to movement displayed on the upper screen of FIG. 20 (May 1998 to August 1999), finding that (February 1995 to May 1996) is closest, and double clicking there.

If finding a similar movement in this way, the chart is held there, the past tendency is calculated, and the predicted share price is displayed.

Note that it is also possible to calculate the difference by a program and automatically search for the same or similar movements rather than moving the chart right or left by scrolling by the upper bar.

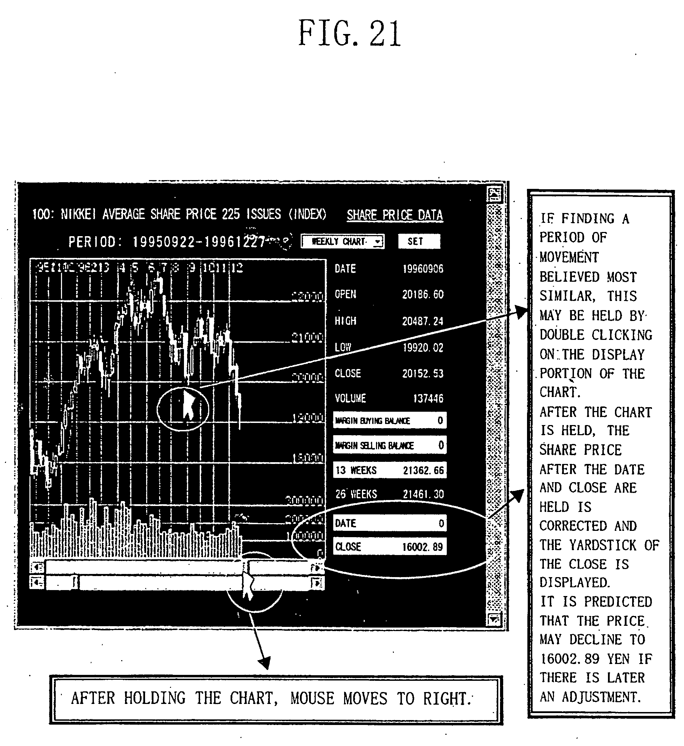

FIG. 21 is a screen showing the case of finding the most similar movement, double clicking on it to hold the display, then sliding the upper scroll bar to the right and showing how the later price moved. The portion shown by the arrow in the chart shows the later low. This price can be predicted to be a price which may decline in a later adjustment.

### Regarding Indicator Chart Display Unit 75

The indicator chart display unit 75 for example uses the method of designating the above period or the method of searching for a period from the chart to display on the same screen various indicator charts of the volume by share price range, margin trading assessed loss, margin share ratio, number of advancing/declining issues, advancing/declining ratio, number of new price issues, share price moving average, share price moving average divergence, ichimoku kinkou hyou, stochastic, RSI, RCI, volume ratio, point and figure, and psychological line along with the share price chart. The example is shown of displaying the point and figure on a separate screen, but it is also possible to display it on the same screen along with the share price chart.

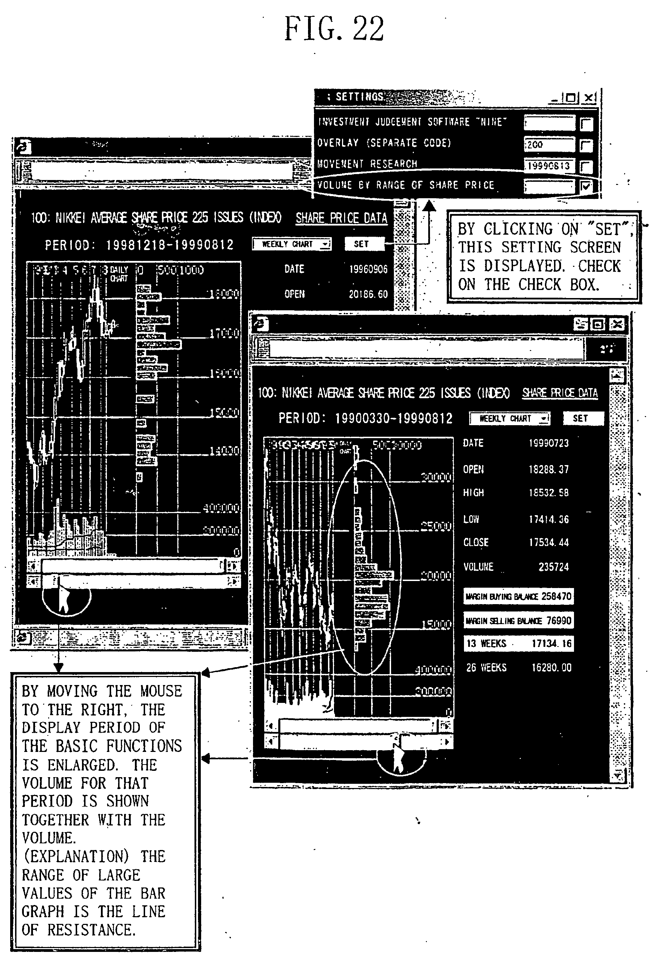

FIG. 22 shows the case of displaying the volume by share price range.

To display the volume by share price range, it is sufficient to push the "set" button on the screen to display the setting screen and check the check box of the "volume by share price range" field.

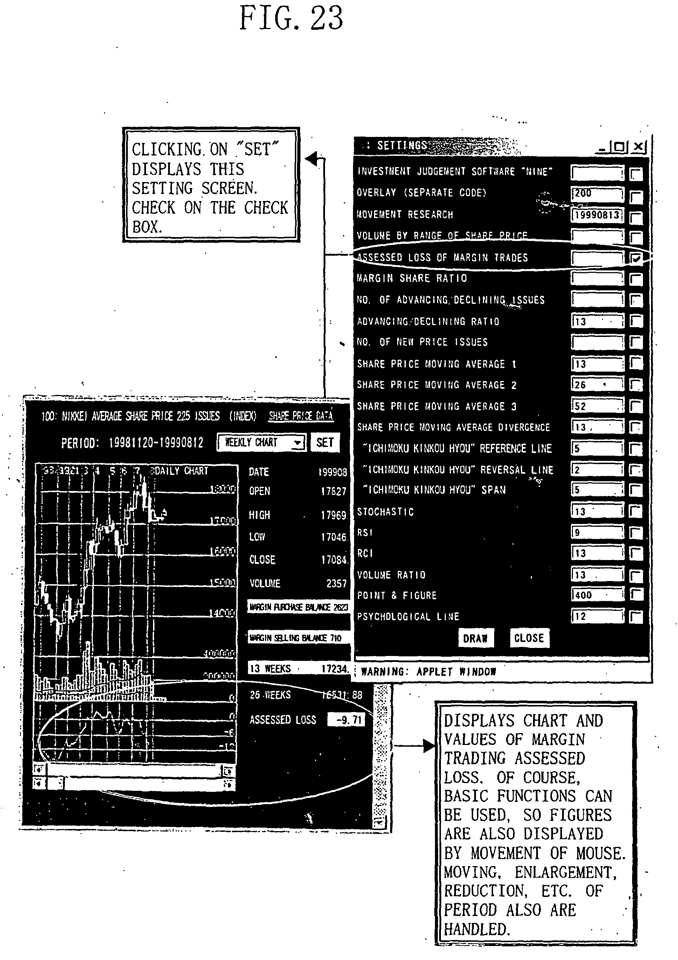

FIG. 23 shows the case of displaying the margin trading assessed loss.

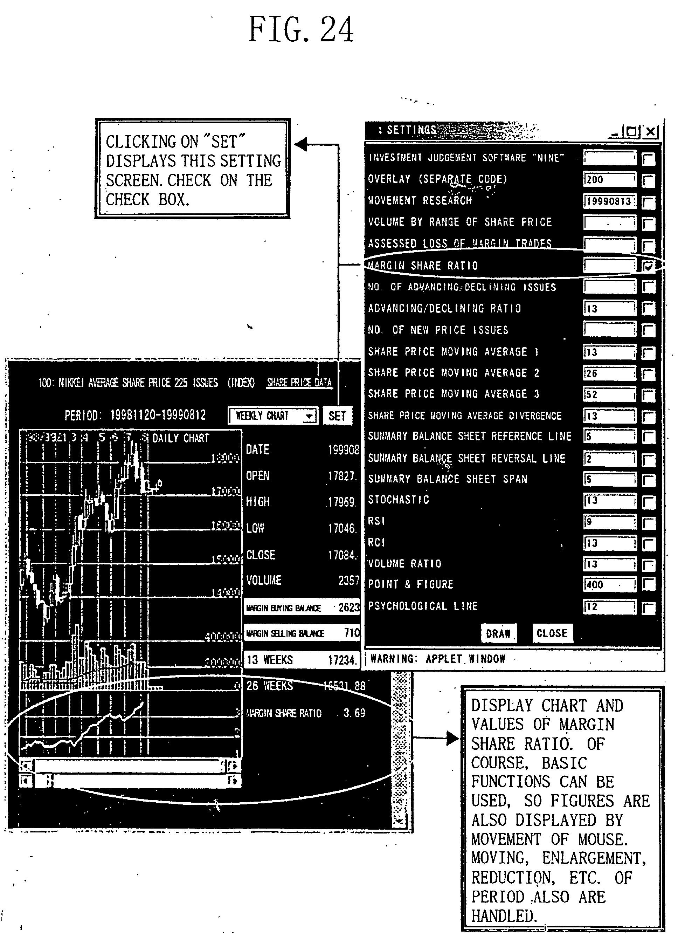

FIG. 24 shows the case of displaying the margin share ratio.

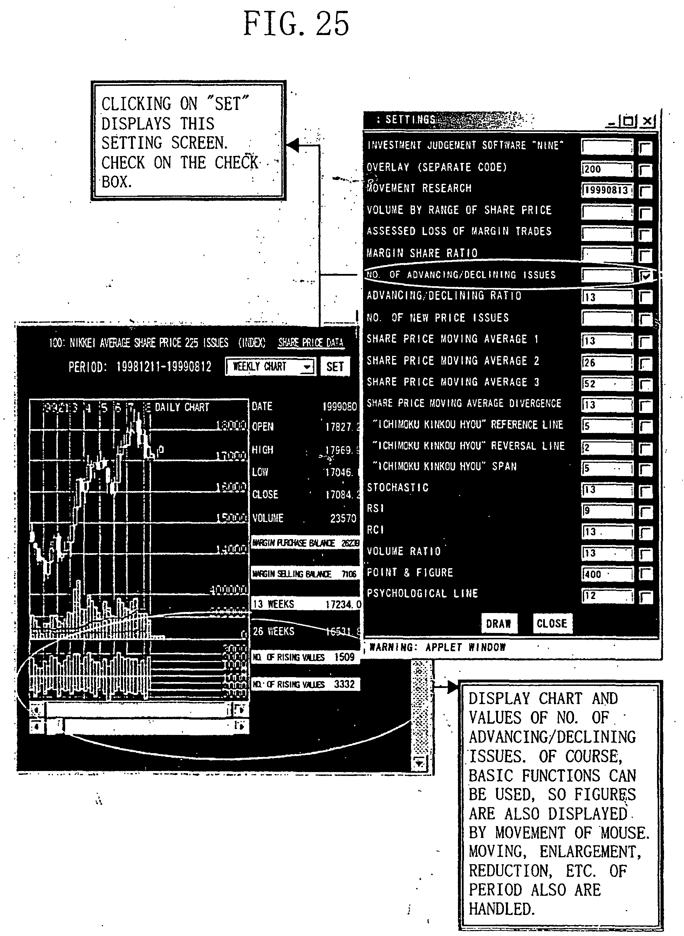

FIG. 25 shows the case of displaying the number of advancing/declining issues.

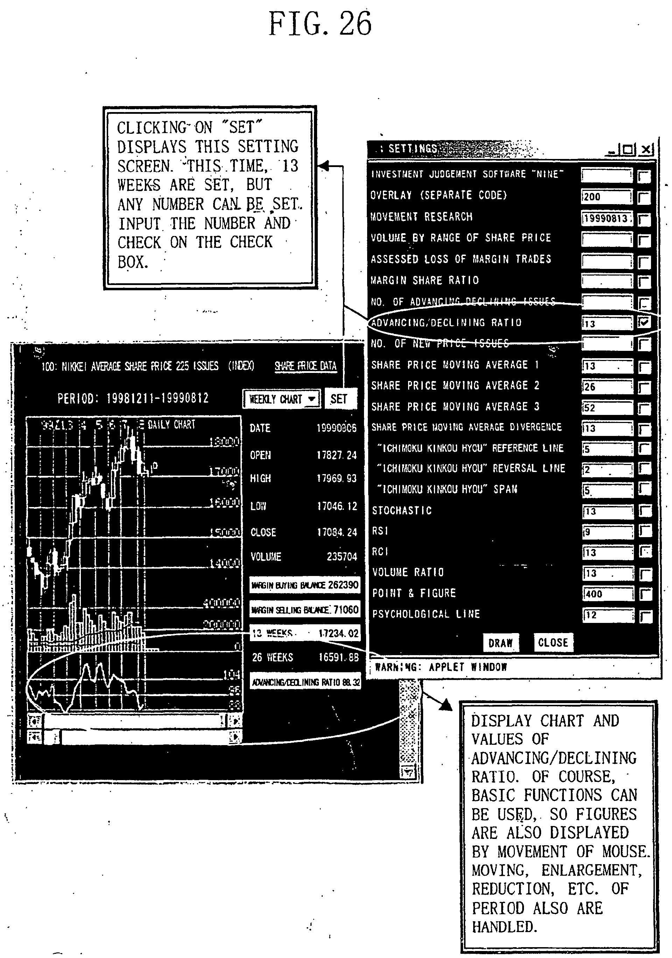

FIG. 26 shows the case of displaying the advancing/declining ratio.

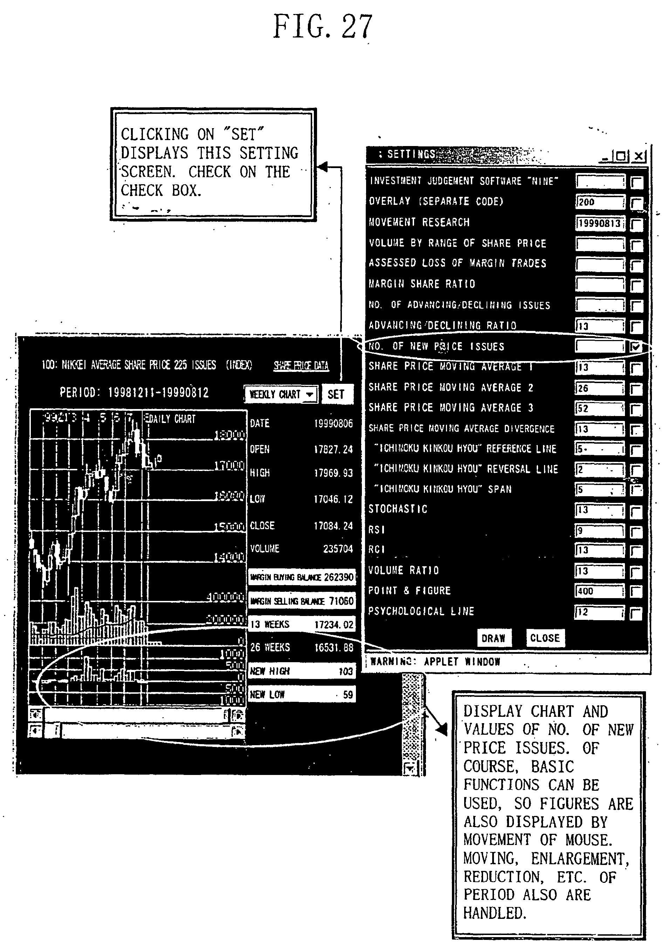

FIG. 27 shows the case of displaying the number of new price issues.

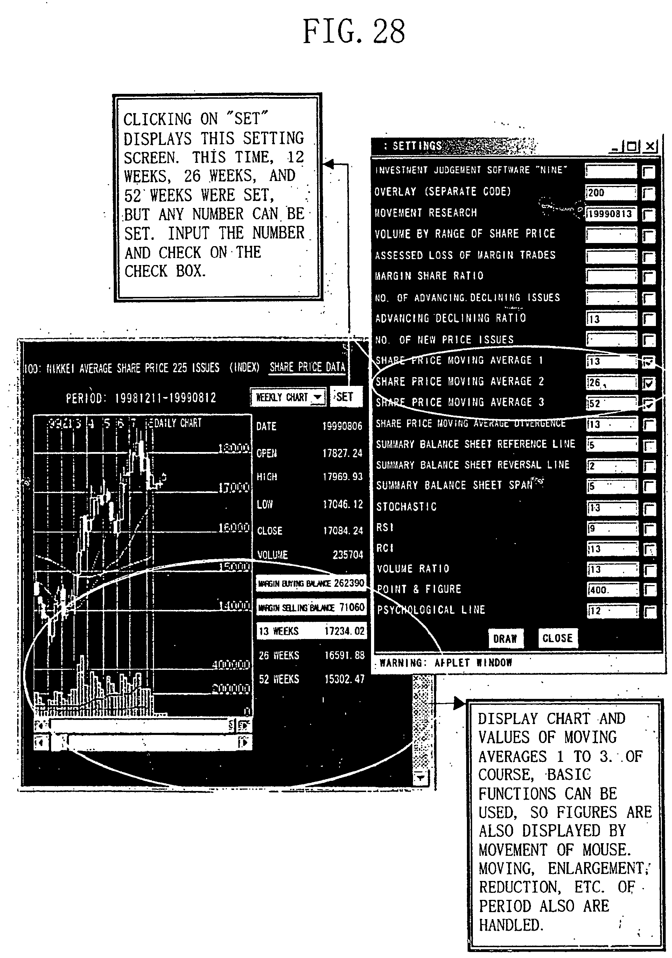

FIG. 28 shows the case of displaying the share price moving average. Since one screen can simultaneously display three moving averages set by the user in any way (for example, moving averages for 13 weeks, 26 weeks, and 52 weeks), it becomes easier to refer to the crosses etc.

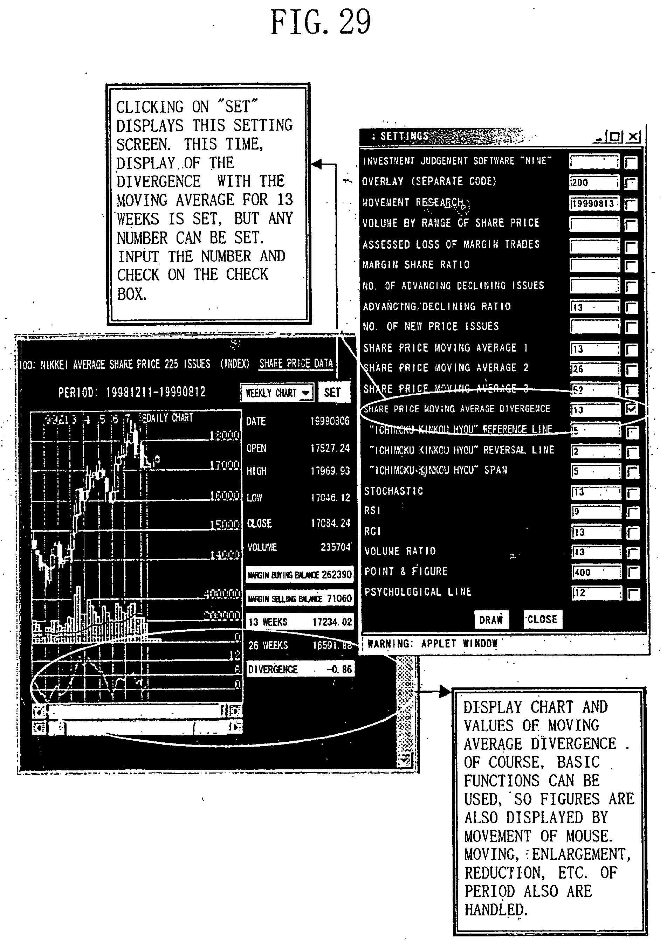

FIG. 29 shows the case of displaying the share price movement average divergence.

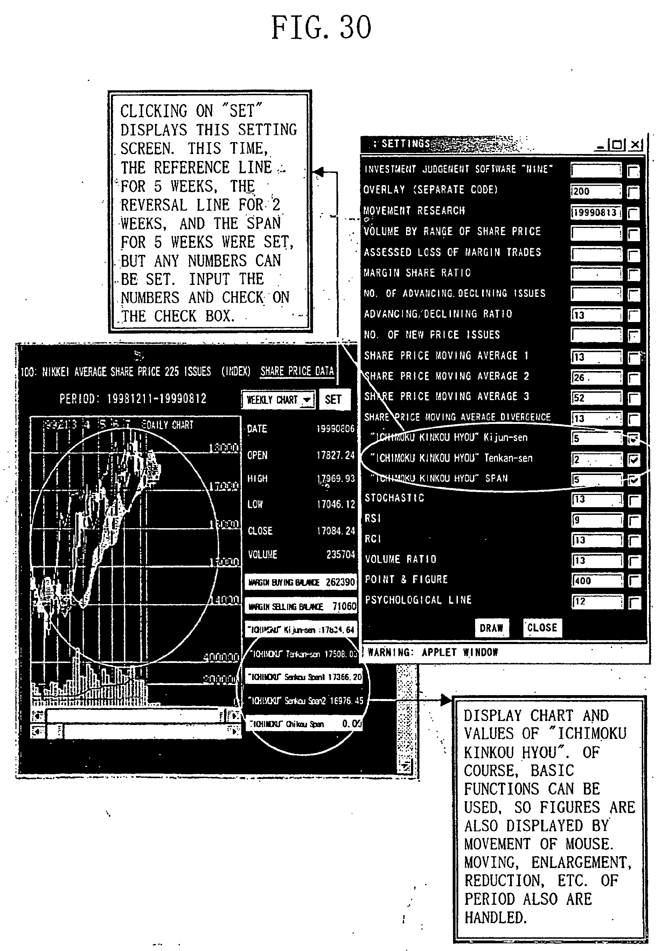

FIG. 30 shows the case of displaying the ichimoku kinkou hyou.

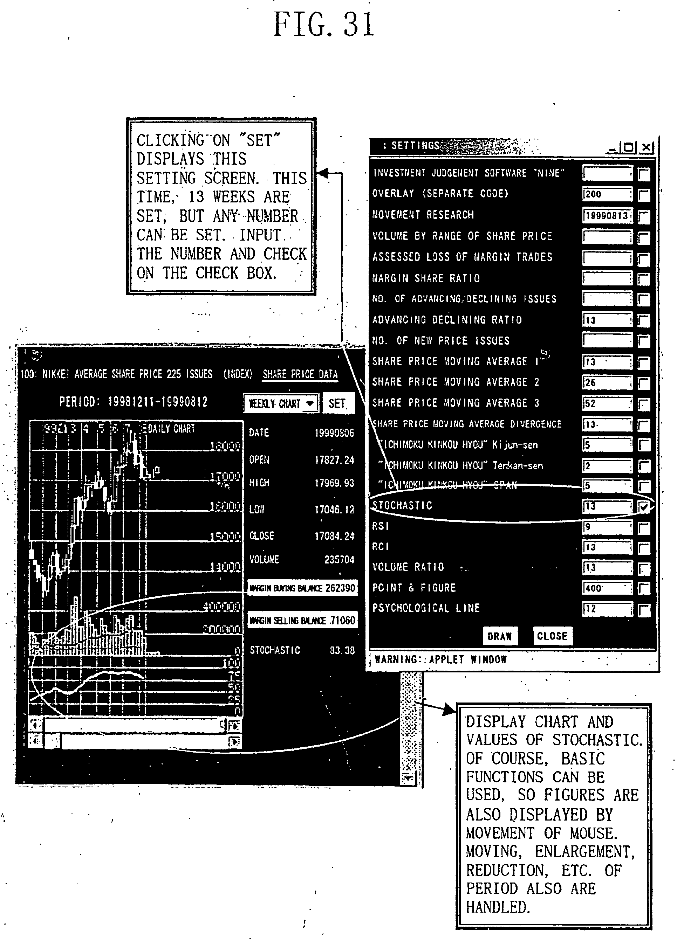

FIG. 31 shows the case of displaying the stochastic chart.

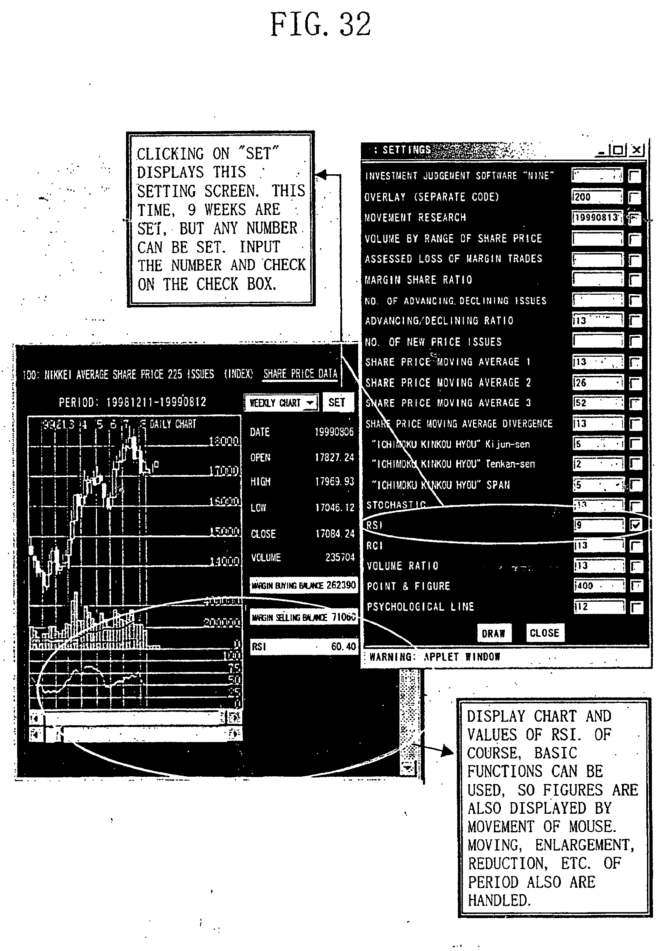

FIG. 32 shows the case of displaying the RSI.

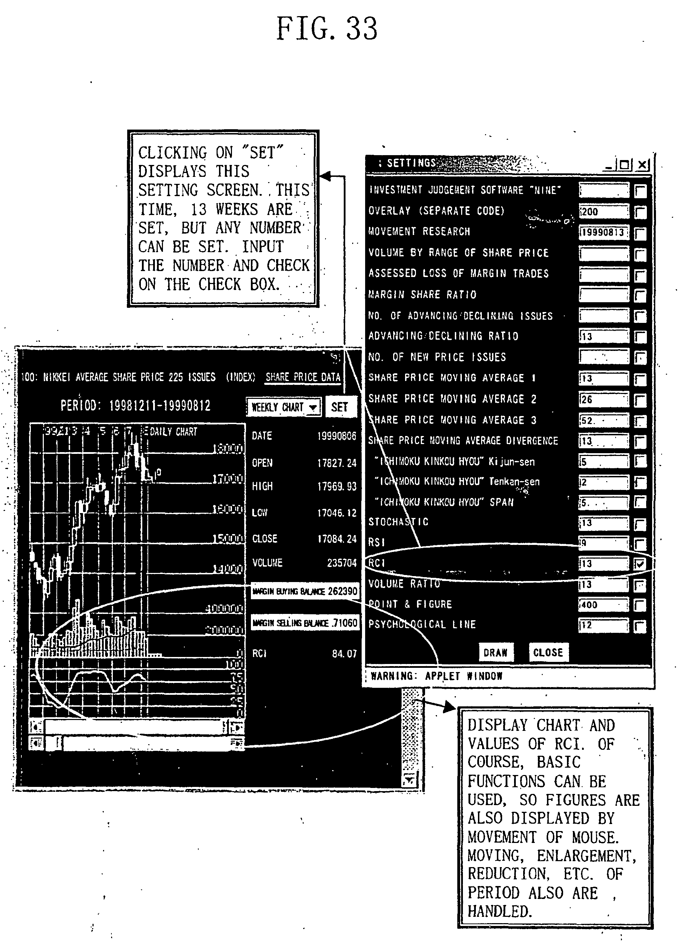

FIG. 33 shows the case of displaying the RCI.

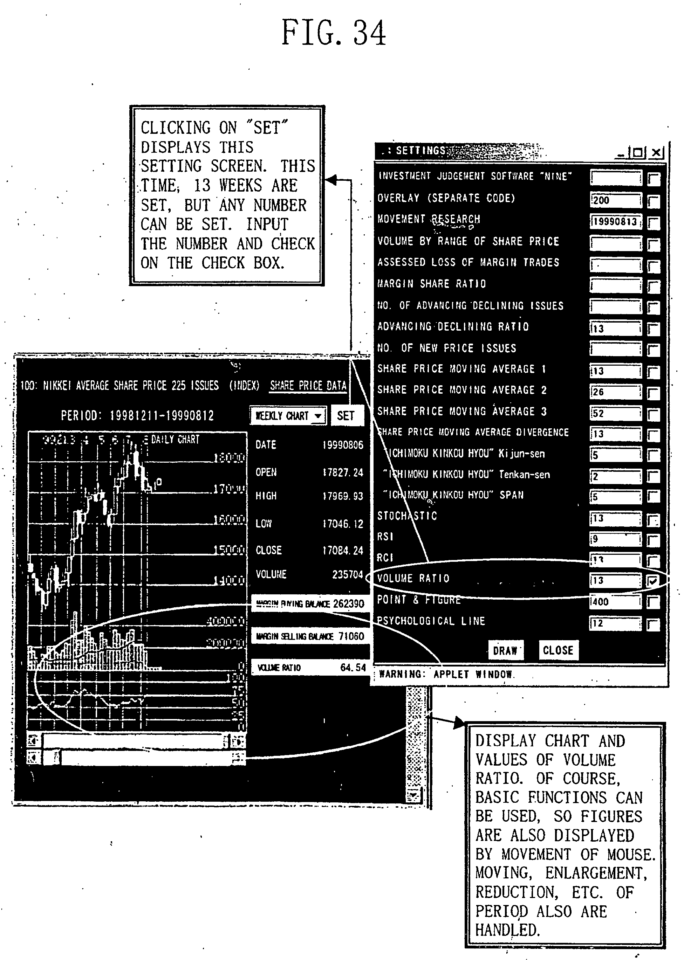

FIG. 34 shows the case of displaying the volume ratio.

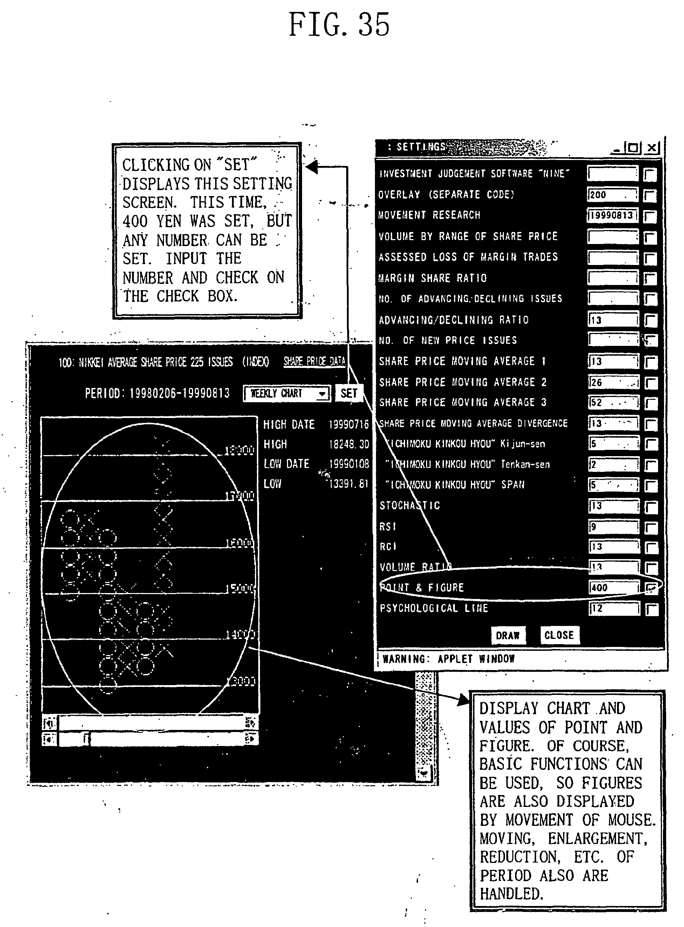

FIG. 35 shows the case of displaying the point and figure.

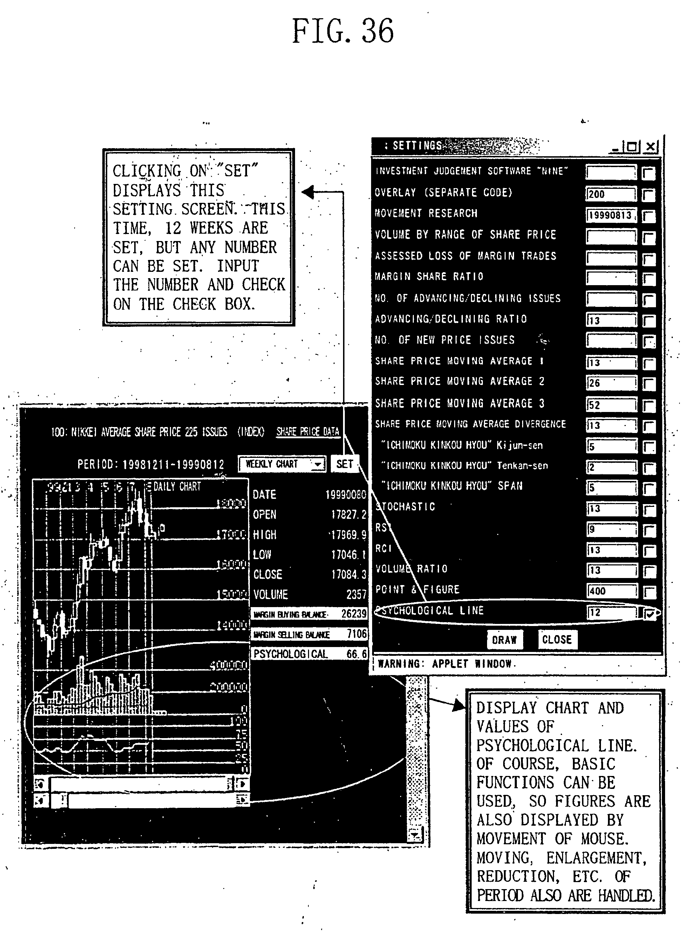

FIG. 36 shows the case of displaying the psychological line.

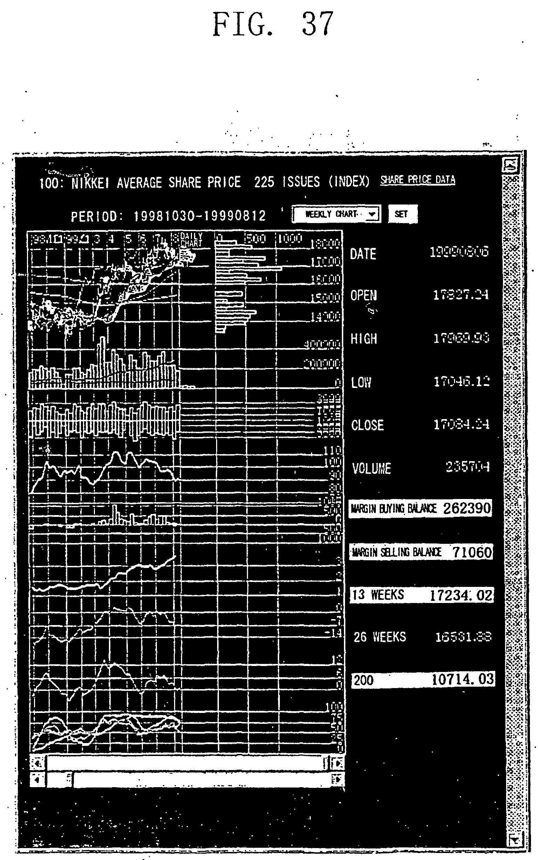

Further, FIG. 37 simultaneously displays on one screen all of the various types of indicator charts described above other than the point and figure.

Next, the securities information stored by the securities information storage unit 81 will be explained in detail.

FIG. 38, FIG. 39, and FIG. 40 show information stored in the securities information storage unit 81.

FIG. 38 shows the share price index and stock market data. If picking up and editing the necessary indexes and data from the 37 types of share price indexes and 11 types of stock market data of Japan and 19 other countries in the world, it is possible to prepare an index and data table of the stock markets of just the necessary information. The data includes a total of 48 types of data. Details are shown in FIG. 38.

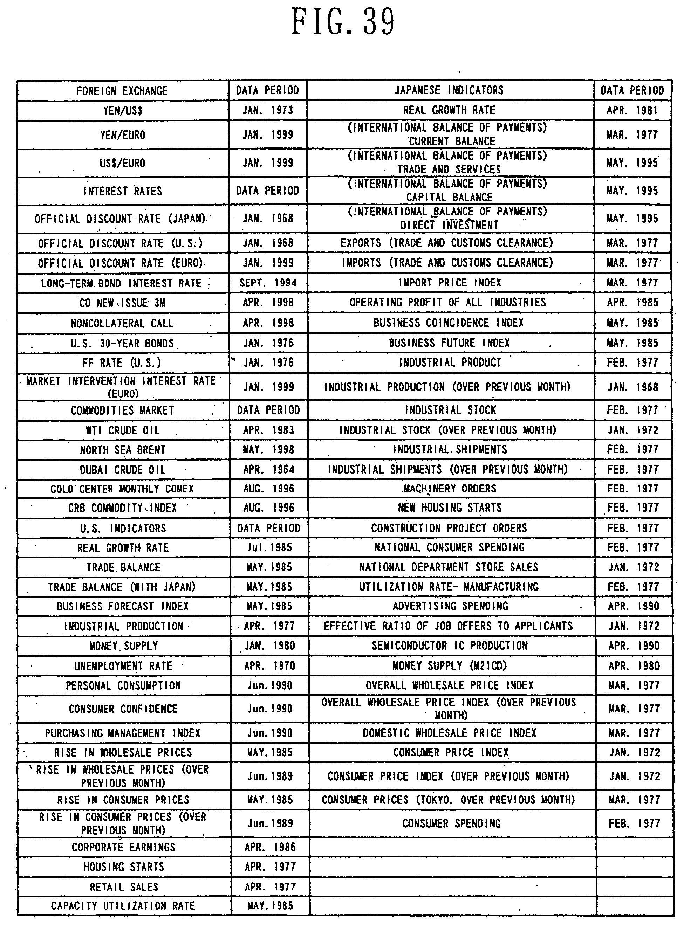

FIG. 39 shows economic data. If picking up and editing the necessary data from the three types of exchange rates, nine types of interest rates, three types of crude oil prices, 34 types of economic data of Japan, and 18 types of economic data of the U.S., it is possible to prepare an economic data table of just the necessary information. The data includes a total of 66 types of data. The figures and graphs of the 66 data may be referred to. Details are shown in FIG. 39.

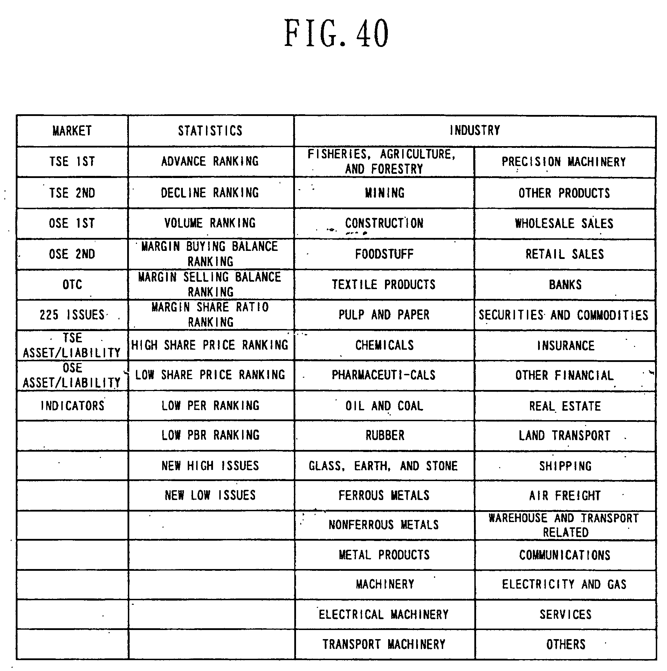

FIG. 40 shows markets for issue provided, various statistics, and industry-wise indexes. It provides various statistics, a list of issues by industry, performance information on individual issues, etc. for all issues listed and made public on the Tokyo Stock Exchange, Osaka Stock Exchange, and over-the-counter market. Details are shown in FIG. 40.

The industry-wise indexes divide issues by industry in accordance with known classifications in general use in the stock market.

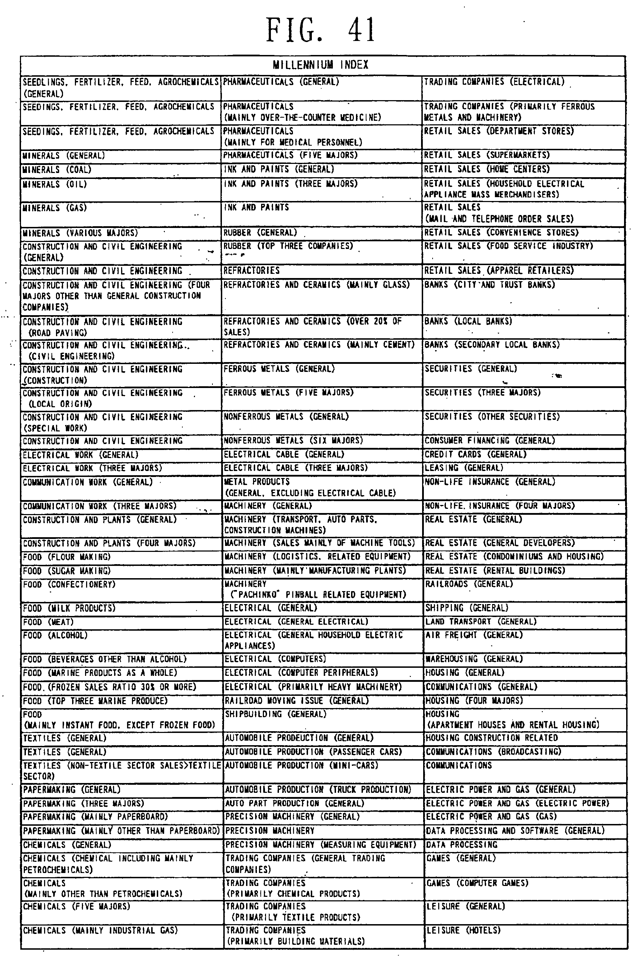

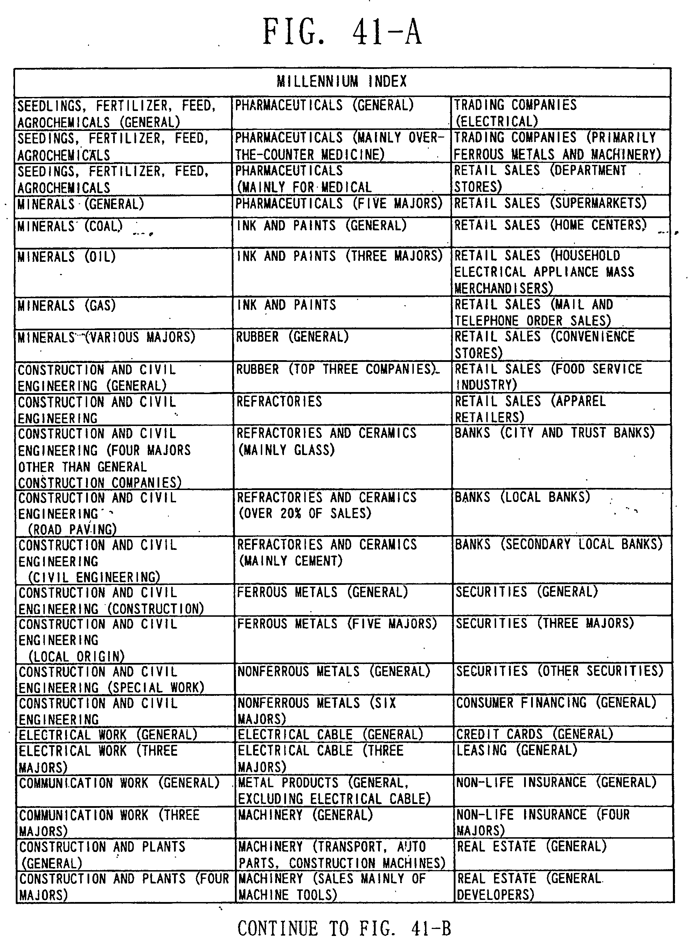

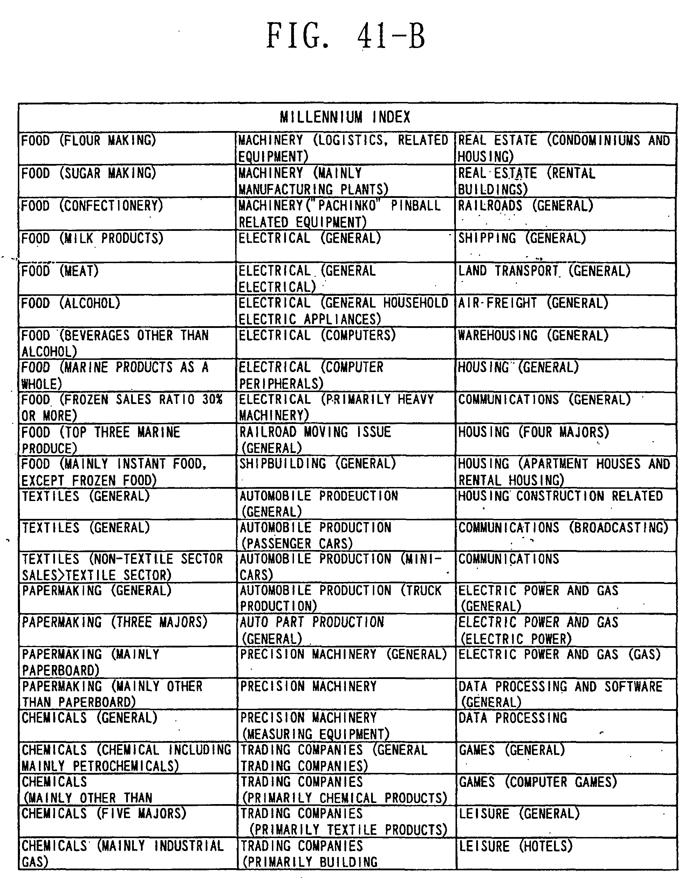

FIG. 41 shows theme-wise indexes obtained by dividing and grouping issues by theme. The system divides and groups all issues of the TSE First Section by theme by a unique understanding and converts them to indexes. There are a total of 137 indexes. Further, when a company is engaged in diverse lines of business, one issue is registered in several indexes. Details are shown in FIG. 41.

The above-mentioned industry-wise indexes include issues not similar in movement of share prices, so issues believed to be similar in movement of share price, that is, issues of themes such as shown in FIG. 41, are provided as theme-wise indexes.

Among the various types of data shown from FIG. 38 to FIG. 41, the data other than the individual issues, that is, the share price index, stock market data, economic data, various types of statistics, industry-wise indexes, and theme-wise indexes are called "indicators" below.

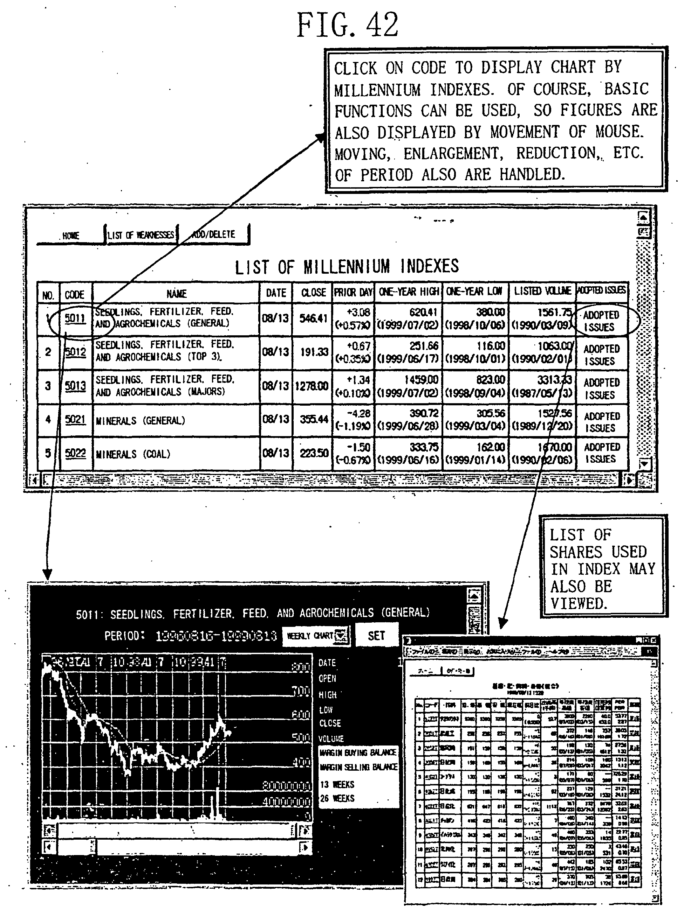

FIG. 42 shows the display screen for theme-wise indexes.

The screen shown in FIG. 42 is displayed and provided to a user by the data provision unit 77. Further, even in the case of an industry-wise index, it is displayed and provided to a user by a format similar to FIG. 42. For the various values of the index, the average values of the plurality of issues included in the index are used.

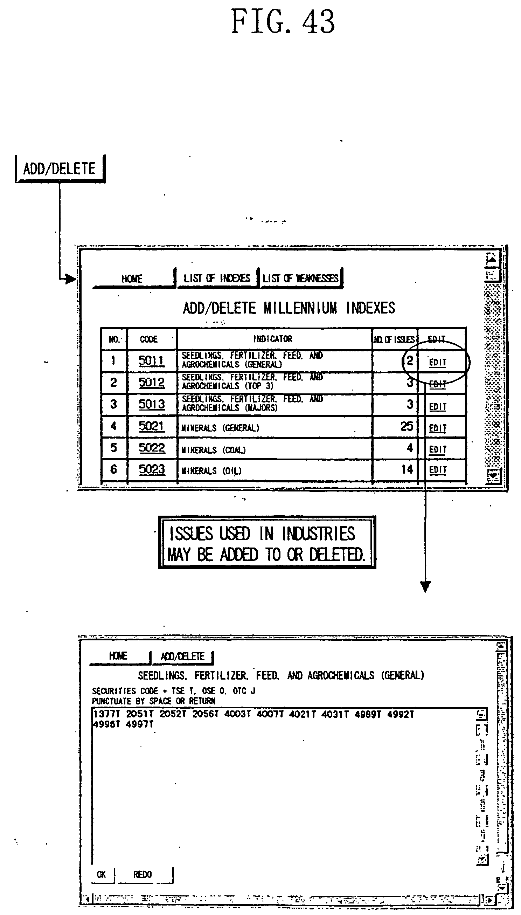

FIG. 43 is a view of the operation of an index editing unit 78.

FIG. 43 shows that issues can be added, deleted, and changed for the theme-wise indexes. The user can operate the index editing unit 78 and click on the "edit" field of the screen to add, delete, and change the theme-wise indexes and the issues included in the industry-wise indexes. Further, the user can operate the index editing unit 78 to add, delete, or change user-defined indexes newly defined by the users themselves.

The various types of data shown from FIG. 38 to FIG. 41 are given issue codes in the same way as individual issues regardless of whether being share price indexes, stock data, economic data, or other types. Data for each day is stored in the same way as with individual issues. Therefore, the data of these indicators can be handled in the same way as the individual issues by designating issues codes attached to these indicators and can be displayed individually by charts or displayed overlaid with other issues. Further, in some cases these indicators themselves become the subject of securities trading such as with foreign exchange rates and gold prices. When these indicators form markets, by using the issue codes attached to these indicators, the above system is applied as it is and the indicators can be made issues for trading in this system.

### Second Embodiment

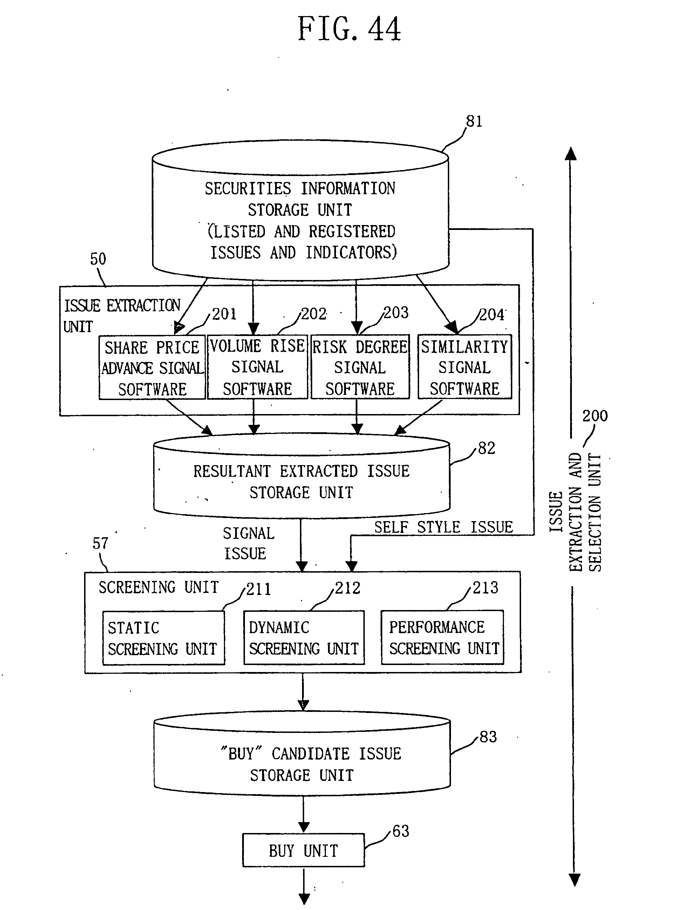

FIG. 44 is a view of the issue extraction and selection unit 200 of this embodiment.

The rest of the portions not described in FIG. 44 are similar to those shown in FIG. 3. As shown in FIG. 44, the issue extraction unit 50 is provided with four softwares, that is, the share price advance signal software 201, the volume rise signal software 202, the risk degree signal software 203, and the similarity signal software 204. Further, the screening unit 57 is provided with three screening units, that is, a static screening unit 211, a dynamic screening unit 212, and a performance screening unit 213.

Next, the four softwares of the issue extraction unit 50 and three screening units of the screening unit 57 will be explained.

### Regarding Share Price Advance Signal Software 201

The share price advance signal software 201 is signal software for extracting issues whose share price has started to advance. A share price repeatedly advances and declines. Therefore, the best method of investment for keeping down risk and increasing return (profit) is to buy by determining the instant that a share price sharply declines and finishes being adjusted and then the share price advances. That is, if it is possible to buy by determining the initial movement of a share price, the share price will rise for a short time and it is possible to set "sell in a short period". If possible to sell in a short period, it is possible to use the same funds several times. The results are completely different when using 1 million yen once and using it 10 times. In the case of one time a year, even if making a 10% profit once, the return for the year becomes only 10%, while if investing 10 times a year, if making a 10% profit each time, the return for the year becomes 100%. Therefore, an investment technique of buying when a stock begins moving (initial movement) is required for increasing the return for the year rather than investment by buying a stock when not knowing when it will move and just waiting.

Further, an issue which the share price advance signal software 201 extracts is one whose share price is starting to move after having declined sharply, so it is considered that it will not peak out. Therefore, even if something happens and the stock market suddenly plunges, the issue will not sharply drop like an "issue bought at its high". The share price advance signal software 201 is software which determines and extracts the initial movement of the share price, but when the share price declines slightly and advances slightly, this does not constitute genuine initial movement, so an issue which moves in this way is not extracted. Here, "initial movement" is a "time when a share price declines sharply, then starts to advance", so this software is software which extracts an issue only when the issue has declined sharply in share price and then started advancing. Therefore, the issues extracted by the share price advance signal software 201 are also bargain issues at the same time as initial movement issues.

### Regarding Volume Rise Signal Software 202

The volume rise signal software 202 is signal software for extracting an issue whose share price has started to advance based on the volume. The above-mentioned share price advance signal software 201 is software for determining the initial movement of the share price. The volume also increases in the same way as the share price when the share price moves.

Therefore, the method of determining the instant when the volume jumps in the same way as the extraction of issues determining initial movement of the share price is effective as the method for extracting the issues for investment. The risk completely differs between when the share price index starts to rise and then the volume further jumps and when the volume jumps in the bottom price region after the share price declines sharply. The volume rise signal software 202 picks up issues only when the volume jumps in the bottom price region. Therefore, the volume rise signal software 202 is software for determining initial movement of volume and simultaneously is software for extracting bargain stocks.

### Regarding Risk Degree Signal Software 203

The risk degree signal software 203 is software for extracting low position issues as seen from the indicators for judgement of the share price and is similar to the risk degree 2 signal software of the first embodiment.

The risk degree signal software 203 is software for screening by the amount of fluctuation of share price or fluctuation of volume for each individual issue for all issues of all of the markets of the TSE, OSE, and OTC market from the technical perspective, verifying the indicator with the highest hit rate among the close to total 200 indicators every day, and extracting the issues whose share price has become a bargain (has fallen sharply) according to the technical indicator. That is, it is software for picking up adjusted issues, so issues whose share price has declined and become a bargain are extracted. However, since issues which continue to decline are also extracted, the issue extraction software is effective not when the market is a polarized one where declining issues continue to decline and advancing issues continue to advance, but when the market is a normal one where issues advance and then decline. The specific method of extraction is to set "various types of share price indexes", "various types of share price indicators", and the "various types of numbers of days", search for "the most accurate one" for each individual issue for the approximately 3000 issues of the TSE, OSE, and OTC market, and extract the (optimal) issues. Therefore, issues are extracted by optimal numbers different for the 3000 individual issues.

### Regarding Similarity Signal Software 204

The similarity signal software 204 is software for extracting issues which have moved in the same way in the past. The software is similar to the similarity signal software 56 of the first embodiment.

The similarity signal software 204 is software for selecting one of the past month, three months, six months, or one year as a continuous movement period and extracting issues whose share prices have moved continuously (similarity issue extraction software). For the continuous movement period, it is also possible to input any period in addition to the past one month, three months, six months, and one year. When the stock market is advancing, this does not mean that all issues advance simultaneously. The time when the market tumbles, hits bottom, then starts to advance is the time when investors are weakest. Almost all investors just watch, so the amount of money flowing into the market becomes smaller. Therefore, money does not flow in as much as when all issues advance at once. First some issues advance, investors gradually participating in the process of selling those issues, then buying the next issues increase, and finally investors who want to buy all buy and the market advances as a whole. When all buying investors buy, the market trend ends.

In the stock market, issues move due to the same types of themes. Further, there are issues which move in the same way even when the themes differ. This similarity signal software 204 is software for picking up issues which have moved in the same way in the same type of time in a certain period in the past.

When viewing a sharply advancing issue, almost all investors think the impossible, that is, "I wish I had bought it before it rose". Since the issue is already advancing, however, the probability that "if buying now, the high will be reached and a loss will result" increases, so investors actually cannot buy it. At this time, almost all investors ask "what is the issue which will sharply advance next in the same way as this issue".

The similarity issue extraction software is software for searching for the "next issue with a high possibility of moving the same as the sharply advancing issue" desired by almost all investors.

As the method of use of the similarity signal software 204, there is the method of an investor checking the top advancing issues on the different markets for each time and inputting the codes of the top issues, the method of the investor inputting issues which it had taken note of, etc., but the important thing is to "input issues which have risen by a large margin". The reason is that there is no sense in looking for issues with a strong possibility of advancing by a large margin in the future without searching for issues which moved in the same way as these issues.

Next, the screening unit 57 will be explained.

It is necessary to separate the issues extracted by the issue extraction unit 50 by the "screening" (conditional searches of issues) explained below. For example, first issues are separated by application of any of a plurality of types of screening such as limiting issues to ones with a high rate of fluctuation in the share price or limiting issues to ones with a low share price level. When there is an issue which the user wishes to buy in the remaining issues, the user decides to "buy", while when there is no issue desired to be bought, it decides to "pass".

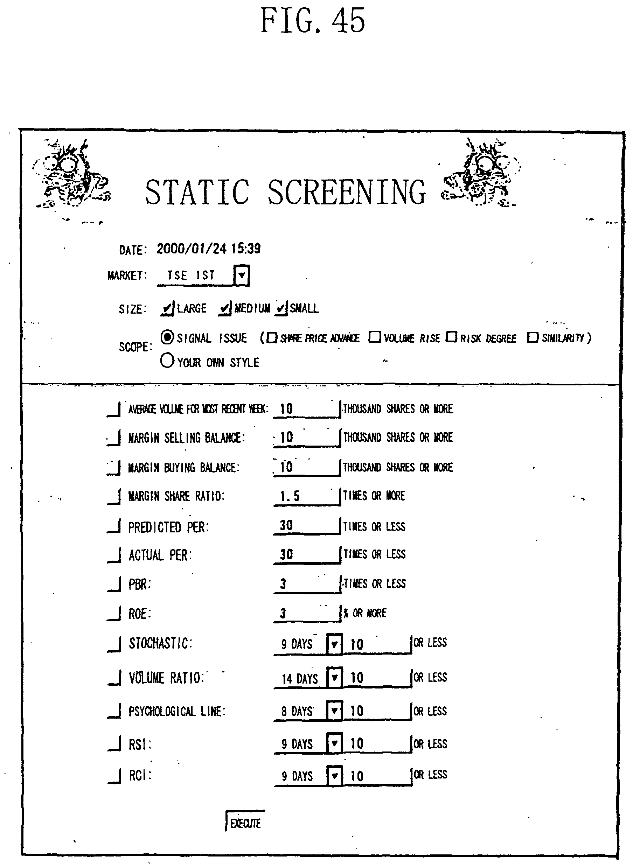

FIG. 45 is a view of a display screen of a static screening unit 211.

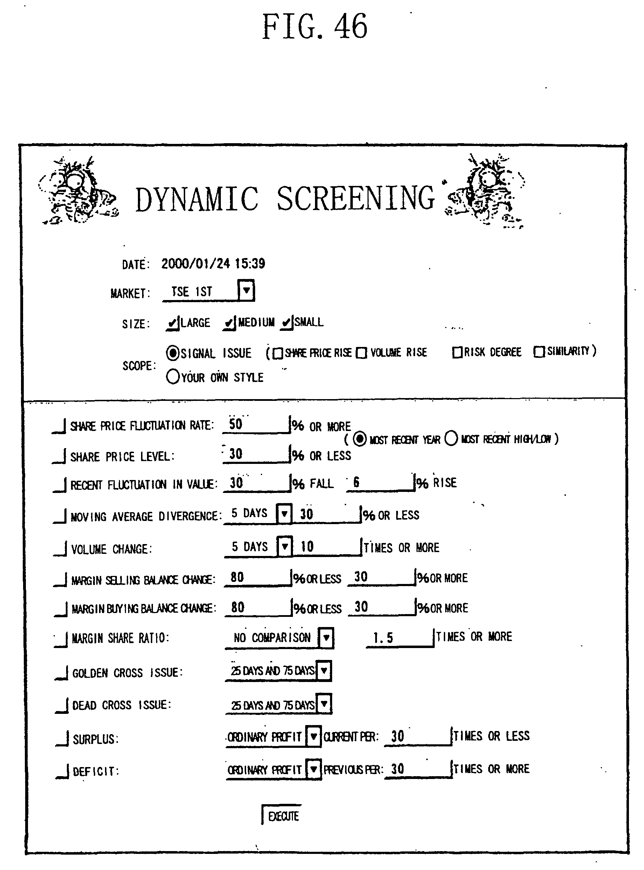

FIG. 46 is a view of a display screen of a dynamic screening unit 212.

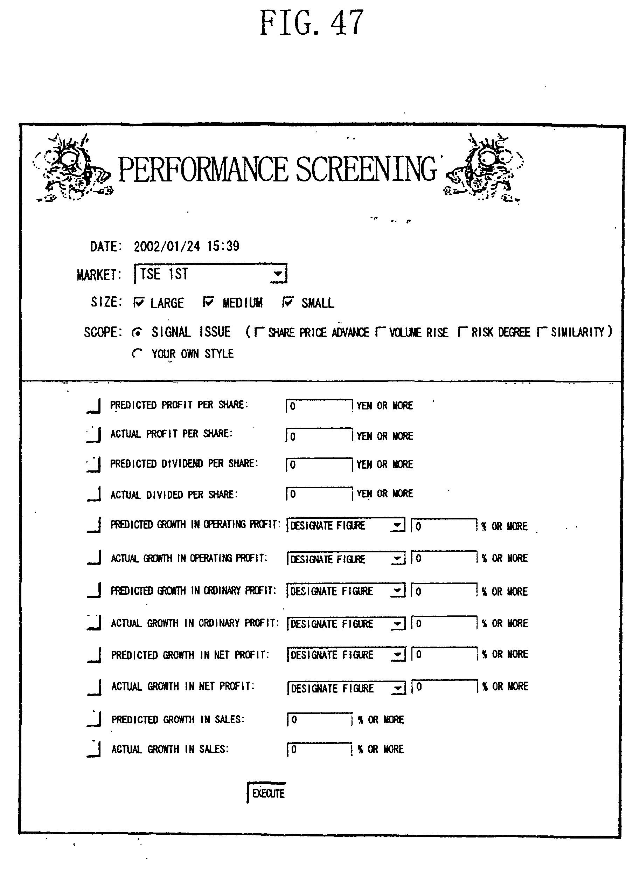

FIG. 47 is a view of a display screen of a performance screening unit 213.

Next, the screening units will be explained.

### Regarding Static Screening Unit 211

The static screening unit 211 is software for screening based on the trading results of the previous day. That is, it is software screening issues based on prices newly updated or indicators newly updated by the trading results of the previous day.

FIG. 45 will be used to explain the static screening unit 211.

First, in "market" on the screen, the market covered is selected from the TSE First Section, the TSU Second Section, the OSE First Section, the OSE Second Section, the OTC market, and all markets.

Next, the "size" of the issues is selected from large, medium, and small. In this case, if clicking on the size desired to be selected, a check mark appears. When simultaneously selecting all sizes of large, medium, and small, all three sizes of large, medium, and small are clicked on. Selection by the static screening unit 211 gives a large number of issues in the bottom price region of the market and does not give many issues in the high price region. That is, the static screening unit 211 sets the system to output issues only when the possibility of the share prices advancing is high since the probability of the share prices declining becomes higher when issues are selected in the high price region.

Next, the user selects whether to screen issues extracted by the issue extraction unit 50 in the "scope" of the screen or screen all issues stored in the securities information storage unit 81. Further, when screening issues extracted by the issue extraction unit 50, it selects the issues extracted by a particular signal software of the share price advance signal software 201, volume rise signal software 202, risk degree signal software 203, and similarity signal software 204 to screen. When selecting "own style", screening is performed for all issues stored in the securities information storage unit 81.

The static screening unit 211 screens for at least one item of the average volume of the most recent week, margin selling balance, margin buying balance, margin share ratio, predicted PER, actual PER, PBR, ROE, stochastic, volume ratio, psychological line, RSI, and RCI.

Each item will be explained below.

### Average Volume for Most Recent Week (More Than Several Shares)

The average volume for the most recent week is the average volume of the total volume of the most recent five business days divided by five. When the average volume is small, it may be considered that the market has ended and the shares may no longer be sellable, so this item is for excluding issues with small volumes.

The average volume for the most recent week is used for differentiating between issues for which there is a certain extent of volume traded and issues for which there is not that much (issues difficult to sell at the time of sale) at the time of performing various types of screening and picking up issues. If inputting 10,000 shares as the average volume for one week, issues with over 10,000 shares traded are picked up.

### Margin Selling Balance and Margin Buying Balance (More than Several Shares)

Sales and purchases are performed by margin trades. Shares are bought back and sold back within six months. The number of shares to be bought back and sold back are input.

### Margin Share Ratio (More than Several Shares)

This is the margin buying balance divided by the margin selling balance.

### Predicted PER (Price Earnings Ratio) and Actual PER (More than Several Shares)

This is the ratio of share price to earnings. The PER is calculated by (share price ) after tax profit per share) and expresses at what ratio of share price to earnings per share shares were purchased at. The higher the ratio, the more expensive the purchase is judged and the lower the cheaper.

The PER is found by dividing the share price by the net profit per share, so if the net profit per share does not change, the PER becomes larger the more the share price advances and becomes smaller the more the share price declines. When using this item, a ratio is input giving a PER of less than 15. Issues in the range of that ratio are picked up.

### PBR (Price Book-Value Ratio) (Less than Several Factors)

This is the ratio of share price to book value. The PBR is calculated by (share price ) book value per share) and expresses at what ratio of share price to book value per share shares were purchased at. The higher the ratio, the more expensive the purchase is judged and the lower the cheaper. A PBR of less than 1 means that the total market price is lower than the breakup price of the company (return per share if the company is broken up).

The PBR is found by dividing the share price by the book value per share, so if the book value per share does not change, the PBR becomes larger the more the share price advances and becomes smaller the more the share price declines. When using this item, a ratio is input giving a PBR of less than 1.5. This being so, issues with a ratio of less than 1.5 are picked up.

### ROE (Return on Equity) (More than Several %)

This is the value of the profit for the period divided by the shareholders' capital.

### Stochastic (Number of Days and % Input to Pick up Issues)

This is an indicator converting the amount of fluctuation of the share price to a number. The smaller the value, the closer to the bottom price. When the value becomes close to 100, the price is at the high. The value is from 0 to 100. For example, if less than 10 is input, issues which have been greatly adjusted are extracted, while if more than 90 is input, issues which have greatly advanced are extracted.

### Volume Ratio (% Input to Pick up Issues)

### Psychological Line (How Many Wins and How Many Losses Input to Pick up Issues)

RSI (Number of Days and % Input to Pick up Issues)
RCI (Number of Days and % Input to Pick up Issues)

### Regarding Dynamic Screening Unit 212

Next, the dynamic screening unit 212 will be explained using FIG. 46.

The method of input of "market", "size", and "scope" in FIG. 46 is the same as with the static screening unit 211. The dynamic screening unit 212 is screening software for determining changes in period. The dynamic screening unit 212 performs screening by designation of the values of the share price, volume, etc. dynamically changing along with the elapse of time. The dynamic screening unit 212, as shown in FIG. 46, can designate one or more of the share price fluctuation, share price level, recent price movement, moving average divergence, change in volume, change in margin selling balance, change in margin buying balance, margin share ratio, golden cross issues, dead cross issues, surplus, and deficit.

The items will be explained below.

### Share Price Fluctuation (Fluctuation in Past Year Input, More than Several %)

The share price fluctuation is calculated by the ((rate of fluctuation in past year - lowest price in past year) ) lowest price in past year).

If the rate of fluctuation for one year is low, the rate of advance when turning to an advance becomes lower, while if the rate of fluctuation is high, the rate of advance when turning to an advance becomes higher. If setting the rate of fluctuation low (for example, 20%), a large number of issues are selected, while if setting the rate of fluctuation high (150%), the number of issues becomes smaller.

For the share price fluctuation, for example, the rate of fluctuation of the share price in the past year is set. For example, if the low of an issue in the past year was 400 yen and the high was 1000 yen, the rate of fluctuation becomes the amount of advance (1000 yen - 400 yen) ) (400) = 1.5 (150%). An issue with a high rate of fluctuation is an issue with a high possibility of advancing sharply when the share price advances. The reason is that investors buy this stock after confirming the previous high, so when the previous high was high, investors will believe that "I'm still in time" even if the share price advances, so the rush of buying will not ebb.

Conversely, when the previous rate of advance is low, it is considered that "even if this issue is advancing, since the rate of advance is low, if purchased too high, a loss will result", so the share price will not rise that much.

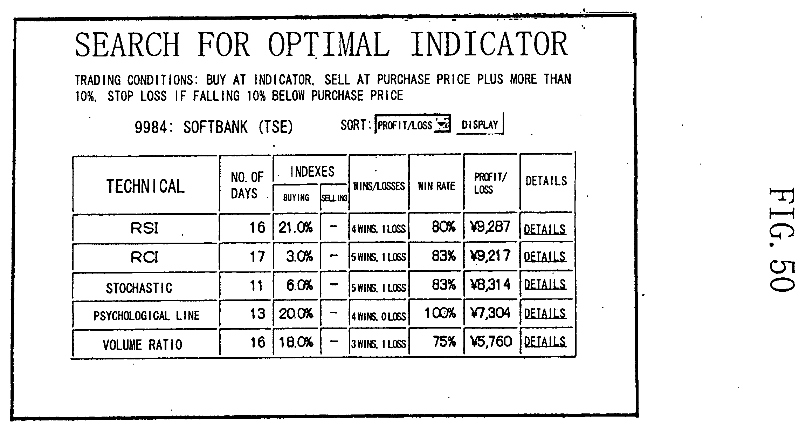

As the setting on the screen of FIG. 45, 50% is shown. If considering safety, 100% and 150% mean high safety. The rate of advance when advancing also becomes higher.

If the rate of advance becomes too high, however, there will no longer be any corresponding issues, so the user checks which degree of rate of advance is good. That is, it checks this by inputting several rates of advance such as 50%, 100%, and 150%. Further, since the rate of fluctuation changes depending on the market environment, the rate of fluctuation is not always the same. The screening is performed by changing the numbers for the occasion by the market environment (large market or small market).

### Share Price Level (Current Level With Respect to Amount of Fluctuation Over Past Year Input, Less than Several %)

This item selects the level between the high and low of the past year a current share price is at. If the % of the share price level is set to zero, issues at the low level of the past year are extracted, while if set at 100%, issues at the high level of the past year are extracted. When selecting issues from an industry at the center of interest, the share price level is set high, while when searching for issues near the bottom, the share price level is set low.

If the share price advanced from 400 yen to 1000 yen, then the share declined to 600 yen due to adjustment, the share price level becomes (600 yen - 400 yen)) (1000 yen - 400 yen) = 33.3%. That is, if asking what level a share price of 600 yen is at with respect to the high 1000 yen and low 400 yen of an issue over the past year, it is a level up 33% from the low.

This does not mean that the lower the level the better. Further, this does not mean that screening by the share price level is absolutely essential. Regarding the decision on the number for the level as well, this changes in a market like the present where advancing issues rise with adjustments while non-advancing issues do not advance much at all. For example, when searching for the weakness of mainstream issues like information communications, the share price level has to be set high or else the issues will end up being eliminated by screening. When searching for issues moving in the bottom price region, the share price level is set low to simply produce them.

For the above-mentioned share price fluctuation and share price level, the "high and low for the past year." were used, but when screening by the "high and low for. the past year" in this way, "most recent year" in FIG. 46 is clicked on, while when screening by the "most recent high and low", "most recent high and low" is clicked on. Further, while not shown, it is also possible to select "high and low for past month", "high and low for past three months", and "high and low for past half year".

### Recent Price Movement (Several % of Decline and Several % of Advance Input)

The rate of decline from the most recent high and the rate of advance from the most recent low after the decline are input. A share price repeatedly advances and declines. Issues which sharply advance and then sharply decline are bargain issues, so if the rate of decline from the most recent high is set, issues declining from the high by that set % are searched for. Further, since with just declining, it is not know when the issue will reverse and start advancing, it is possible to select issues which advance sharply after just starting to move by searching for issues which reach that rate of decline and have advanced by a certain % recently. For example, when desiring to pick up an issue declining 30% and then advancing 6%, "30% decline and 6% advance" is input.

### Moving Average Divergence (Designation of Moving Average for Several Days or Weeks, Divergence of Less than Several %)

This item finds the "adjusted issues" and "issues with high possibility of sharply advancing and declining" from the divergence between the moving average lines of the daily charts or weekly charts. When searching for expensive issues, the upper % of the divergence is input, while when searching for cheap issues, the lower % of the divergence is input.

### Change in Volume (Volume More than Several Times Greater)

In general, the advance in share price and rise in volume are directly proportional. This item picks up issues whose volume has increased several times over the average volume of the most recent five days. If an issue which only traded in a volume of 10,000 shares up to now suddenly increases in volume to 100,000 shares, this issue is picked up if the number 10 was input. This item searches for the first day when an issue sharply increases in volume.

### Change in Margin Selling Balance and Change in Margin Buying Balance (Reduction From High, More than Several % and Less than Several %)

When picking up share prices by the balance of margin trading, the general practice is to screen using the "margin share ratio". This item screens the state of the balance of margin trading six months (absolute date of margin trading) after the day of the greatest balance of margin trading. For example, the supply-demand environment changes between the case where the margin buying balance changes sharply and the absolute date is reached and the case where the absolute date is reached without the margin buying balance falling.

That is, this item performs screening by inputting the degree of consolidation in the margin buying balance and margin selling balance for issues with large margin buying balances toward an absolute date. For example, if inputting more than 80%, issues where'more than 80% of the balance will remain from the time of the greatest balance, that is, issues with a possibility of opposite trading occurring in the future and the share price moving, are picked up, while if inputting less than 30%, issues for which margin trading has substantially finished being consolidated are picked up.

### Margin Share Ratio (More than Several Factors)

The margin share ratio is the margin buying balance divided by the margin selling balance. When these numbers approach, it means that short selling and hedging occur and the margin buying balance and margin selling balance approach. When the margin share ratio is 1, the margin buying balance and margin selling balance are the same. When the margin share ratio falls below one, the margin selling balance has exceeded the margin buying balance.

"No comparison", "increase over previous week", or "decrease over previous year" is selected and the ratio input.

If 1.5 is input as the margin share ratio, issues having an margin share ratio of less than 1.5 are picked up.

### Golden Cross Issues (Number of Days arid Number of Weeks of Moving Average Line Input)

The "golden cross" means when the short term moving average line passes through the long term moving average line from the bottom to the top. When this happens, the probability of the share price sharply advancing is high, so this is frequently used. There is a daily chart golden cross and weekly chart golden cross. In both cases, any two periods are input. As the golden cross most frequently used by investors, there are the daily charts of 25 days and 75 days and weekly charts of 13 weeks and 26 weeks.

### Dead Cross Issues (Number of Days and Number of Weeks of Moving Average Line Input)

The "dead cross", opposite to the golden cross, is the case when the short term moving average line passes through long term moving average line from the top to the bottom. In this case, the probability of the share price falling is said to be high. The numbers are input by the same method as with the golden cross.

### Surplus-Turning Companies (List of Companies Turning to Surplus Next Period)

This idea selects only companies which ran a deficit in the previous period and have turned to a surplus in the current period.

The "operating profit", "ordinary profit", or "net profit" is selected and screening performed by the value of the PER of the current period.

### Deficit-Turning Companies (List of Companies Turning to Deficit Next Period)

This item excludes companies which ran a surplus in the previous period and turned to a deficit in the current period.

The "operating profit", "ordinary profit", or "net profit" is selected and screening performed by the value of the PER of the previous period.

### Regarding Performance Screening Unit 213

The performance screening unit 213 of FIG. 47 screens issues based on their performance. As shown in FIG. 47, the performance screening unit 213 selects at least one of the predicted per share profit, actual per share profit, predicted per share dividends, actual per share dividends, predicted operating profit growth, actual operating profit growth, predicted ordinary profit growth, actual ordinary profit growth, predicted net profit growth, actual net profit growth, predicted sales growth, and actual sales growth for screening.

These items will be explained below.

### Predicted Per Share Profit and Actual Per Share Profit (More Than Several Yen)

Screening by profit per share.

### Predicted Per Share Dividends and Actual Per Share Dividends (More than Several Yen)

Screening by dividends per share.

### Predicted Operating Profit Growth and Actual Operating Profit Growth (More than Several-%)

Predicted Ordinary Profit Growth and Actual Ordinary Profit Growth (More than Several %)

### Predicted Net Profit Growth and Actual Net Profit Growth (More than Several %)

The above six items are all rates of change of profit. For example, the predicted operating profit growth is found by dividing the predicted operating profit of the current period by the operating profit of the previous period. If the operating profit of the previous period was 2 billion yen and the predicted operating profit of the current period is 3 billion yen, this means growth of 150%. One of "designate number", "surplus-turning companies", and "exclusion of deficit companies" is selected and the growth rate input. When desiring to pick up companies with a growth rate of more than 30%, 30% is input.

### Predicted Sales Growth and Actual Sales Growth (More than Several %)

The predicted sales growth and actual sales growth are rates of change of sales. Issues are picked up from the rate of increase in sales.

For example, when picking up companies increasing sales by more than 10%, 10% is input.

Note that while not shown, it is also possible to add the following items.

### Dividend Yield (More than Several %)

The dividend yield is the dividend divided by the share price. For example, if the dividend is 10 yen a year and the share price is 500 yen, the dividend yield is 2%. Therefore, if inputting 3%, issues having a dividend yield of more than 3% is picked up.

In the screens from FIG. 45 to FIG. 47, if clicking on "execute", issues are selected based on the conditions of the items selected for the screening and the screening results such as shown in FIG. 8 are displayed on the screens. The operation after this is the same as in the first embodiment, so the explanation will be omitted here.

This embodiment is characterized by the provision of the dynamic screening unit 212. The dynamic screening unit 212 performs screening using the maximum value, minimum value, current value in the case of a high or low generated, or the rate of change, that is, the type of change, of a certain value with respect to the maximum value, minimum value, or high or low, for a certain period Alternatively, the unit performs screening based on the rate of change, that is, how constantly changing values changed. In conventional screening, issues were never screened by taking note of the rate of change in a certain period.

In this way, the present embodiment is characterized by screening issues using the dynamic rate of change.

In the above-mentioned embodiments, what was explained as "units" or "software" can all be configured by programs which can be run on a computer. That is, the magnetic disk device 46 is a storage medium storing programs which can run on a computer. These programs can be prepared by for example the C language. Alternatively, the HTML, SGML, or XML may also be used. Alternatively, it is possible to use JAVA to display screens or display charts.

Further, the software and programs of the above embodiments may also be realized by firmware stored in a ROM. Alternatively, they may be realized by hardware. Alternatively, the functions of the programs may be realized by combining software, firmware, and hardware.

Further, instead of the magnetic disk device, it is also possible to use other display devices. Further, instead of the magnetic disk device, it is also possible to use a storage device using an optical disk, CD, or other storage medium.

Further, the above-mentioned firmware is one example. Various forms of firmware are conceivable. For example, the index file format, index sequential file format, or relational data base or other data file format are also possible. Further, the securities information storage unit 81, the extracted issue storage unit 82, the "buy" candidate issue storage unit 83, the purchased issue storage unit 84, and the "sell" candidate issue storage unit 85 were explained as separate files, but it is also possible to combine these five files to a single file and use flags or identifiers to achieve the same functions as the five files. Further, it is also possible to combine several of the files among the five files. That is, in this system, any type of data storage format or file format may be used.

Further, the data, files, or programs can be stored at the user PCs or server.

In the examples of the above embodiments, the explanation was given of the stock market, but the above-mentioned system can also be used when a user invests in a market whose prices are determined by sales and purchases. For example, the present system can also be used for future tradings, option tradings, etc.

### Third Embodiment

Next, in this embodiment, the portions different from the first embodiment will be explained.

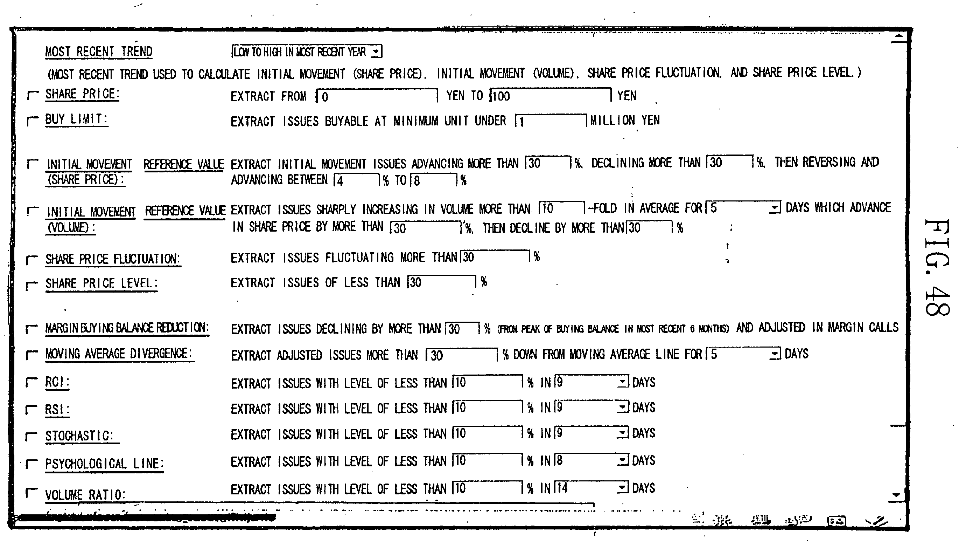

FIG. 48 shows an example of a screening screen prepared in a home page provided by a server 33 for a user PC.

FIG. 48 shows a screen displayed by a screening unit 57 for a user PC.

Note that in the screening of FIG. 48, it is also possible to extract issues in advance by the issue extraction unit 50. It is also possible for there not to be an issue extraction unit 50 and to screen for all issues.

In FIG. 48, input fields of the following (1) to (13) are displayed.
(1) Share price
(2) Purchase limit
(3) Initial movement (share price)
(4) Initial movement (volume)
(5) Share price fluctuation
(6) Share price level
(7) Margin buying balance reduction
(8) Moving average divergence
(9) RCI
(10) RSI
(11) Stochastic
(12) Psychological line
(13) Volume ratio

The user can select one or more of the input fields from (1) to (13) as the screening criteria. In this embodiment, the (3) initial movement (share price) will be explained.

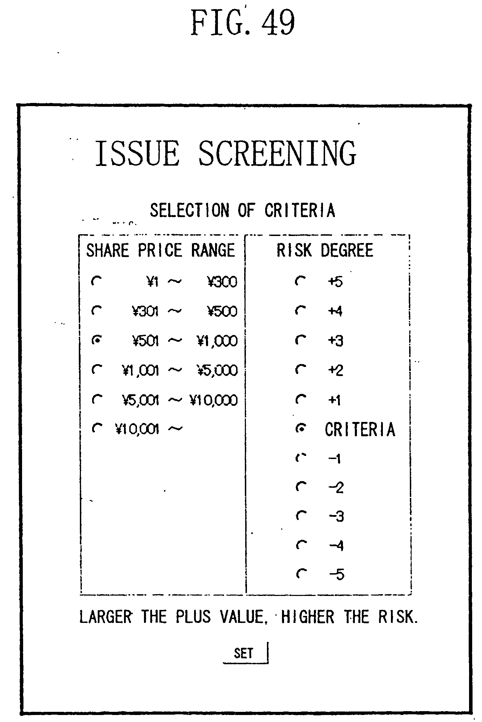

The user can select the "initial movement (share price" by the checkpoint. Further, by clicking on the "reference value" button, it is possible to make the system calculate the input values of "30" and "30" displayed as "advancing more than 30%, then declining more than 30%" and set them in the system. When not clicking on the "reference value" button, the values of "30" and "3) can be manually input by the user. When the user clicks on the "reference value" button, the issue screening screen shown in FIG. 49 is displayed. Before displaying the issue screening screen of FIG. 49, the reference value calculation program of the system calculates the reference values. The method of calculating the reference values will be explained below.

First, the data covered by the calculation of the reference values is made the data of all issues in the most recent two years. Further, the rates of advance of continuing advancing trends of issues occurring in the two years are found for all issues. Further, the rates of decline for all continuing declining trends are found. For example, when an issue A advances in share price continuously for seven days and rises from 100 yen to 150 yen, the rate of advance is 50%. Conversely, when the issue A declines continuously for 10 days from 150 yen to 75 yen, the rate of decline becomes 50%. Pluralities of these rates of advance and rates of decline are found for all over the two years. Rates of advance and rates of decline of less than 5% are ignored, while the averages of the rates of advance and rates of decline over 5% are found. For example, when the issue A has advanced just two times in the past two years and the rates of advance were 10% and 20%, the average of the rates of advance becomes 15%.

Next, the issues are divided by size of the companies into large, medium, and small issues. The averages of the rates of advance of issues belonging to the large size, medium size, and small size issues and the averages of the rates of decline are calculated and used as reference values for the different sizes (averages of rates of advance and averages of rates of decline for each size).

Similarly, the issues are divided by industry such as electricity and foodstuff. The averages of the rates of advance and the rates of decline are found for the different industries and used as reference values.

Further, similarly, the issues are grouped by range of share price such as 1 yen to 300 yen, 301 yen to 500 yen, ... and averages of the rates of advance and rates of decline for the different groups found and used as reference values. The issue screening screen displayed when calculating the reference values for the different price ranges is shown in FIG. 49.

When the screen shown in FIG. 49 is displayed, the reference values for the different price ranges are already calculated. For example, here, assume that the average rate of advance for issues of share prices between 501 yen to 1000 yen is calculated to be 25% and that the average rate of decline is calculated to be 28%. As shown in FIG. 49, when the user selects a "price range" of 501 yen to 1000 yen and a "risk degree" of "standard", the values of 25% and 28% are automatically displayed at the portions currently displayed as 30% and 30% in FIG. 48. If the user designates a risk degree in FIG. 49 other than "standard", the calculated rate of advance is made + or -. For example, by increasing the risk degree 1 at a time, the calculated value is decreased by 2% each time. Conversely, by decreasing the risk degree 1 at a time, the reference value is increased 2% at a time. For example, when making the risk degree +2, 25% - (+2 x 2%) = 21% and 28% - (+2 x 2%) = 24%. The screen of FIG. 48 displays "advancing more than 21%, then declining more than 24%). In this way, the reference value calculation program uses the averages of the past rates of advance and rates of decline for different groups as reference values, corrects the reference values by risk degrees acceptable to the user, and displays the results on the screen of FIG. 48. Further, in FIG. 48, the values of "4" and "8" of "from 4% to 8%" can be freely input and designated by the user.

Further, even when clicking the "reference value" button in the "initial movement (volume)" of (4), the values for replacing "30" and "30" of "share price advancing by more than 30%, then declining by more than 30%" are calculated in the same way as with the above "reference values" and displayed by the reference value calculation program. The values of "5" and "10" of "more than 10-fold for average 5 days" are input and designated by the user.

The way to obtain profit from stock investment is "to buy a stock which will advance low, and sell it high after advancing". The method of "buying an already advancing stock and selling it immediately after further advancing" is also able to "obtain an extremely large profit in a short period" when the share price advances steadily, but in the opposite case, the share price "has already sharply advanced, so will sharply decline when declining as well". Therefore, investment becomes one where "the profits are large, but the losses are also large".

The important thing for individual investors is to keep their limited funds from being reduced as much as possible. Therefore, they invest only in "issues where there are advancing materials and a low probability of declining and high probability of advancing." This method of investment is called "investment in bargain stocks".

That is, investing in bargain stocks is the safest and most profitable method of investment. The problem is "how to find bargain stocks". In actuality, if searching for bargain stocks, the method ends up being "searching by looking at charts". Even if searching for issues using low PER issues as the condition, if an issue is "an originally low PER issue for which a low PER is only natural", no profit will be made even if buying it.

The method of searching for issues by a single condition in this way is called "primary processing". With primary processing, however, it is difficult to find the issues sought by investors. As to what can be done, investment software which can perform "secondary processing and tertiary processing" is used.

Here, what the "secondary processing" and "tertiary processing" mean will be explained.

The method of screening by one condition or two or more conditions all at once is primary processing. If it is possible to screen for changes in periods of indexes or numbers (advancing several %, then declining several % and recently advancing several % as shown in (3) or (4) of FIG. 48), this becomes secondary processing. Further, screening secondary processed data (issues or numbers) by certain conditions based on actual movement to "search for issues to buy" is called tertiary processing. When searching for issues to invest in, unless possible to screen for "some change in period" (secondary processing and as a result screen if "there are conditions against investing at the present for the produced issues" (tertiary processing), it is not possible to perform the "complicated processing like that performed by the human brain". Further, there is not enough time in the world for a person to perform this complicated processing, so this system provides investment software enabling this secondary processing and tertiary processing. Having this complicated processing be performed by computer is a feature of the investor support software of this system. That is, the complicated calculations and searches are performed by computer. The user only uses the results, so the process conversely becomes extremely simple. That is, a system is provided which has the user click the "reference value" button as shown in FIG. 48 (3) and (4) and decide on the two points of which investment scope (which group) to search through for issues and what degree of risk to assume as shown in FIG. 49 and "has the rest of the screening work performed by the computer".

The primary, secondary, and tertiary processings can be summarized as follows:
(1) Primary processing: The method of searching for issues by one condition or two or more conditions, for example, (1), (2), and (5) to (13) of FIG. 48
(2) Secondary processing: The method of searching for issues by changes in period of indexes or numbers, for example, (3) and (4) of FIG. 48
(3) Tertiary processing: Actually viewing movement of the price of shares or numbers found by the secondary processing and judging if the actual conditions of purchase are satisfied so as to check by a chart displayed by the chart display unit 58 (FIG. 9 and FIG. 14 to FIG. 37).

### Fourth Embodiment

Next, in this embodiment, portions different from the first embodiment will be explained.

FIG. 50 shows the screen for searching for an optimal indicator.

The screen shown in FIG. 50 gives an additional function to the indicator chart display unit 75. FIG. 31 to FIG. 34 and FIG. 36 show the case of use of charts using different indicators. In each case, the user has to designate the value of the indicator from the setting screen. When the user is a beginner, however, it often is perplexed over what kind of number to set the value at. Therefore, this system provides a yardstick as to how to set the values of different indicators in order to make a profit. For example, since the system displays the optimum indicator search screen shown in FIG. 50 and the user knows the "number of days" and "index" of the RSI believed to be optimal, in FIG. 32, the user can use the optimal indicator of the RSI to check the chart.

The values displayed are calculated in the following way by the optimal indicator search program.

The optimal indicator search program covers the data of an issue for the most recent two years. Further, it calculates the conditions for the optimal technical indicators (periods and indexes) for the technical indicators of the RCI, RSI, stochastic, psychological line, and volume ratio. Here, "optimal assessment scope" is made any of the following:
(1) "Profit/loss": Order of greatest profit
(2) "Win rate": Order of greatest win rate
(3) "Wins/losses": Order of most wins
By selecting one of the above (1), (2), and (3) (in FIG. 50, selecting "profit/loss"), it is possible to sort and display the values of the assessment scope in the order of size. Further, as the buying condition, "buy at conditions of technical indicator (period and index)" is used.

As the sell condition, "sell at purchase price plus more than 10% (win) or if falling 10% below purchase price (loss)" is used.

Method of finding conditions of technical indicator (period, index): Certain range is set for the "period" (for example, 1 day to 730 days), one of the "conditions of the technical indicator", and an "index", the other "condition of the technical indicator", is calculated. For example, the "period" is set to one day and the "index" and "optimal assessment scope" of (1), (2), and (3) are calculated in 730 ways for all the days of two years. Further, the "period" is set to two days and the "index" and "optimal assessment scope" of (1), (2), and (3) are calculated in 729 ways for all days of two years.

In this way, the "index" is calculated until the "period" reaches 730 days. As a result, the "indexes" are found corresponding to the parameter of the "period" and all combinations of the "period" and "index" are calculated. Further, the "optimal assessment scope" of (1), (2), and (3) are calculated for all combinations of the "period" and "index". Next, all combinations of the "period" and "index" are sorted using the "optimal assessment scope" of (1), (2), and (3) selected by the user as the sort key. For example, in FIG. 50, "profit/loss" is selected, so all combinations of "period" and "index" are sorted by the value of "profit/loss" and as a result the "period" and "index" of the RSI when generating the maximum profit is displayed in FIG. 50 (one row). Further, it is also possible to display the top 10 for example (10 rows) rather than display one (one row).

In this way, FIG. 50 shows the case of designation displayed in the order of the profit/loss, that is, profit. For example, looking at RSI, when designating the number of days as 16 and the index becomes 21.0%, if assuming that the issue "Softbank" has been purchased, the issue advanced by more than 10% from the purchase price four times in the past two years and declined more than 10% from the purchase price once (that is, four wins and one loss) resulting in a win rate of 80%. The maximum profit at this time is shown as being 9287 yen per share. Further, by pressing the "details" button, the detailed data of the past five occasions is displayed by a tabular format or graph format. By displaying the screen of FIG. 32 from the screen, the five portions of the four wins and one loss on the chart are displayed by highlighting or inversion to enable at what portions there were wins or losses to be seen on the chart.

In the above way, the optimal indicator search program calculates the index of RSI using the 730 number of days from 1 day to 730 days every day, searches for cases where the profit becomes the highest among them, and displays the result as 9287 yen. The optimal indicator search program similarly calculates this for the other four technical indicators and displays the results in FIG. 50.

Note that when making the sort criteria the win rate, the issues are displayed in the order of the win rate. Similarly, when making the sort criteria the win/loss ratio, the issues are displayed in the order of number of wins.

As explained above, even when a user is a beginner, the program automatically analyzes the data of the past two years to search for issues with large profits, win rates, or wins/loss ratios and automatically displays the number of days and indexes at that time, so the user can decide whether or not to buy issues in accordance with the numbers of days and indexes displayed at that time. For example, when examining the issue "Softbank" shown in FIG. 50, if the number of days of the RSI is made 16 and the index becomes 21%, it is possible to decide that an advance of more than 10% from the purchase price can be expected with an 80% win rate. The values of a "number of days of 16" and an "index of 21%" are automatically displayed by the program. As shown in FIG. 32, compared with the effort of the user in inputting some numbers and checking the chart, the amount of effort is greatly reduced and whether to buy an issue can be judged.

Further, in FIG. 50, when the index is "sell", nothing is shown, but when it is the opposite "buy", it is possible to judge an issue from a "sell" index.

### Fifth Embodiment

Next, in this embodiment, portions different from the first embodiment will be explained.

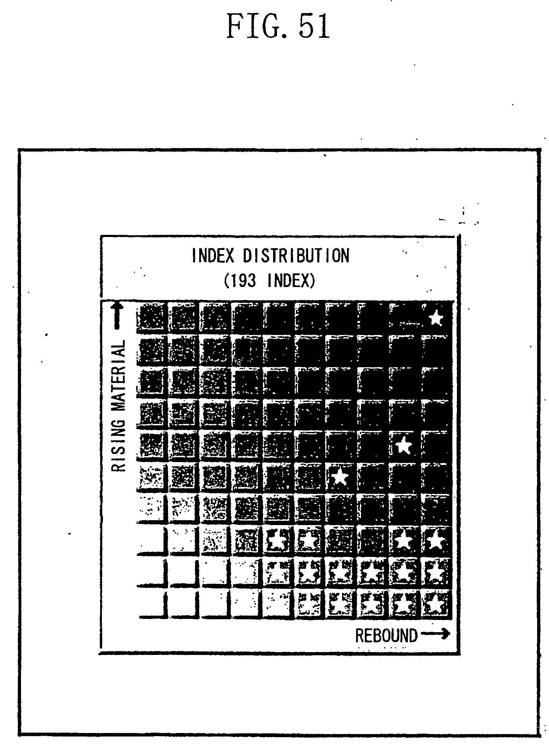

FIG. 51 shows an index distribution screen displayed by the screening unit 57.

The "rising materials" on the ordinate of the matrix is the rate of advance of a share price. Further, the "rebound" of the abscissa is the rate of decline of the share price. The maximum value on both the abscissa and ordinate are 100%. The matrix is divided into blocks of 10% units. For example, when the maximum rate of advance of the issue A in the past two years is 95%, while the maximum value of the rate of decline of the issue A in the past two years is 92%, the top right block in the index distribution chart shown in FIG. 51 is displayed with an asterisk. This asterisk indicates that there is at least one issue having a rate of advance of more than 91% and a rate of decline of more than 91%. Further, by clicking on this asterisk, it is possible to display a list of the issues having a rate of advance of more than 91% and a rate of decline of more than 91% and it is possible to select an issue A from the list and display the chart of the issue A.

The index distribution chart shows the issues where the share prices have advanced and declined sharply in the past two years the further to the top right and shows issues where the share prices have not advanced or declined much at all and exhibiting little movement the closer to the bottom left. A user can click on as asterisk in the index distribution chart to select a desired issue by the magnitude of the rate of advance and rate of decline.

### INDUSTRIAL APPLICABILITY

In the above way, according to the preferred embodiments of the invention, since provision is made of an issue extraction and selection unit 200 and issue pick and selection unit 300, it is possible to consolidate and comprehensively perform the series of tasks of investors of extraction of issues, management of issues, and picking up of issues.

Further, since the issue extraction unit 50 extracts issues based on a plurality of different extraction criteria, the user can study whether to buy issues extracted by extraction criteria which it believes most suitable and there is no longer a need for analyzing an enormous amount of securities information.

Further, since the screening unit 57 is provided, the user can select issues in accordance with its screening criteria from issues extracted by the issue extraction unit 50, the intentions of the user are reflected, and the flexibility of the system is improved.

Further, since the screening unit 57 is provided with a dynamic screening unit 212, it is possible to select issues using the rate of change for a certain period.

Further, since the chart display unit 58 displays charts of different issues, the user can judge trading of individual issues by chart analysis.

Further, since the pick unit 64 is provided with a plurality of pick criteria, the user can select pick criteria suitable for itself to select "sell" candidates.

According to the system of the preferred embodiments of the present invention, it is possible to provide a system not having a securities information provider provide securities information recommending an issue unilaterally and not having a user judge if an issue should be traded by obtaining information on individual issues from an enormous amount of securities information, but achieving a balance between the two. That is, it is possible to provide a system where the issue extraction unit 50 and the pick unit 64 narrow down the issues based on the plurality of criteria which each user might use and provide them to the user, where the user has the responsibility for what criteria was used for narrowing down the issues selected, and, finally, the user makes judgements and decisions on issues for individual trades on its own responsibility.

Further, according to the preferred embodiments of the present invention, since the chart display unit 58 is provided, it is possible to not only display candlestick share price charts, but also display other charts attached to the candlestick share price charts. The user can effectively analyze and judge issues for selection of issues to trade.

## Claims

1. A securities trading support system **characterized by** being provided with:
an issue extraction and selection unit for receiving as input securities information of a plurality of issues, extracting from the securities information of the plurality of issues an issue having securities information matching with a predetermined extraction criteria, and presenting the extracted issue to a user to prompt the user to select an issue to buy and
an issue pick and selection unit for registering purchase information of an issue selected by said issue extraction and selection unit, picking an issue to sell from registered issues based on purchase information of the registered issues and securities information of the registered issues, and presenting the picked issue to the user to prompt the user to select an issue to sell.

2. A securities trading support system as set forth in claim 1, **characterized in that** said issue extraction and selection unit is provided with:
an issue extraction unit for analyzing securities information based on a predetermined extraction criteria and extracting an issue matching that extraction criteria and
a screening unit for prompting a user to input a screening criteria for screening issues and providing the user with an issue matching a screening criteria from issues extracted by the issue extraction unit.

3. A securities trading support system as set forth in claim 1, **characterized in that** said issue pick and selection unit is provided with:
a purchased issue storage unit for registering, managing, and storing purchase information of issues selected by said issue extraction and selection unit and
a pick unit for analyzing securities information based on a predetermined pick criteria and picking an issue matching a pick criteria from issues stored in said purchased issue storage unit.

4. A securities trading support system **characterized by** being provided with:
a securities information storage unit for storing securities information of a plurality of issues,
an issue extraction unit for reading securities information stored in said securities information storage unit, analyzing the read securities information based on a predetermined plurality of different extraction criteria, and extracting an issue matching with the plurality of extraction criteria as an extracted issue to be presented to a user,
an extracted issue storage unit for storing extracted issues extracted by said issue extraction unit,
a screening unit for prompting a user to select at least one extraction criteria from said plurality of extraction criteria, prompting the user to input a screening criteria for selecting an issue to buy from said extracted issues, reading an extracted issue matching with the extraction criteria selected by the user from extracted issues stored in said extracted issue extraction unit, reading securities information of the read extracted issue from said securities information storage unit, screening the read securities information by a screening criteria input by the user, and selecting an issue matching with both the extraction criteria and screening criteria as a "buy" candidate issue of the user, and
a "buy" candidate issue storage unit for storing "buy" candidate issues selected by the screening unit and providing stored "buy" candidate issues to the user.

5. A securities trading support system **characterized by** being provided with:
a securities information storage unit for storing securities information of a plurality of issues,
a purchased issue storage unit for receiving as input, managing, and storing purchased issues which have been already bought by a user as a portfolio,
a pick unit for prompting a user to select a pick criteria from a predetermined plurality of different pick criteria, reading purchased issues input, managed, and stored as a portfolio in said purchased issue storage unit, reading securities information of the read purchased issues from the securities information storage unit, analyzing the read securities information based on the pick criteria selected by the user, and picking up an issue matching with the pick criteria as a "sell" candidate issue,
a "sell" candidate issue storage unit for storing "sell" candidate issues picked up by the pick unit and providing stored "sell" candidate issues to the user.

6. A securities trading support system **characterized by** being provided with:
a securities information storage unit for storing securities information of a plurality of issues,
an issue extraction unit for analyzing securities information stored in said securities information storage unit based on a predetermined plurality of different extraction criteria, extracting an issue matching with the plurality of extraction criteria, and presenting it to the user as an extracted issue,
a screening unit for prompting a user to select at least one extraction criteria from said plurality of extraction criteria, prompting the user to input a screening criteria for selecting an issue to buy from said extracted issues, selecting an issue matching with the selected extraction criteria and input screening criteria from extracted issues extracted by said issue extraction unit, and displaying it to the user as a "buy" candidate issue,
a buy unit for prompting the user to select an issue to buy from "buy" candidate issues displayed by said screening unit as a "buy" issue and buying the "buy" issue,
a purchased issue storage unit for receiving as input, managing, and storing purchased issues bought by the buying unit as a portfolio,
a pick unit for prompting a user to select a pick criteria from a predetermined plurality of different pick criteria, reading purchased issues input, managed, and stored as a portfolio in said purchased issue storage unit, analyzing securities information stored in the securities information storage unit of the read purchased issues based on the pick criteria selected by the user, picking up a purchased issue matching with the pick criteria, and displaying it to the user as a "sell" candidate issue, and
a sell unit for prompting the user to select a "sell" issue to be sold from "sell" candidate issues displayed by the pick unit and selling the "sell" candidate issue selected by the user.

7. A securities trading support system as set forth in claim 4, **characterized in that** said issue extraction unit extracts an issue using as an extraction criteria at least one of a fluctuation in price, volume, risk degree, and securities indictor of securities.

8. A securities trading support system as set forth in claim 5, **characterized in that** said pick unit picks up an issue using as a pick criteria at least one of a sell target price, a rate of decline of the price of the security, and a securities hold period of a purchased issue.

9. A securities trading support system **characterized by** being provided with:
a securities information storage unit for storing securities information of a plurality of issues and
a chart display unit for reading securities information from the securities information storage unit and displaying the read securities information as a chart,
the chart display unit provided with an active display unit for displaying a chart of securities information corresponding to the date and tracking movement of a cursor displayed on the chart to actively display numbers of the securities information of the date corresponding to the location the cursor is moved to.

10. A securities trading support system **characterized by** being provided with:
a securities information storage unit for storing securities information of a plurality of issues and
a chart display unit for reading securities information from the securities information storage unit and displaying the read securities information as a chart,
the chart display unit provided with a display period changing unit for displaying a chart of securities information corresponding to the date and a scroll bar and tracking scrolling of the scroll bar to change a period displayed in a display field of the same size.

11. A securities trading support system **characterized by** being provided with:
a securities information storage unit for storing securities information of a plurality of issues and
a chart display unit for reading securities information from the securities information storage unit and displaying the read securities information as a chart,
the chart display unit provided with a movement research unit for searching for movement similar to movement of a certain period of the displayed chart from other periods of the chart.

12. A securities trading support system **characterized by** being provided with:
a securities information storage unit for storing securities information of a plurality of issues and
a chart display unit for reading securities information from the securities information storage unit and displaying the read securities information as a chart,
the chart display unit provided with an overlay display unit for displaying the chart of another issue overlaid on the chart of a certain issue already displayed.

13. A securities trading support system **characterized by** being provided with:
a securities information storage unit for storing securities information of a plurality of issues and
a chart display unit for reading securities information from the securities information storage unit and displaying the read securities information as a chart,
the chart display unit provided with an indicator chart display unit using any one of at least a method of designating a period and a method of searching for a period from a chart for an already displayed chart of an issue so as to display at least one indicator chart of a volume by range of share price, margin trading assessed loss, margin share ratio, number of advancing/declining issues, advancing/declining ratio, number of new price issues, share price moving average, share price moving average divergence, ichimoku kinkou hyou, stochastic, RSI, RCI, volume ratio, point and figure, and psychological line.

14. A securities trading support system as set forth in claim 4, **characterized in that** said securities information storage unit further deems an indicator used for at least one of the share price index, stock market data, and economic data as one issue and storing the data of that indicator as securities information.

15. A securities trading support system as set forth in claim 4, **characterized in that** said securities information storage unit further deems industry-wise indexes obtained by grouping pluralities of issues of the same industries as single issues, storing the averages of the securities information of the plurality of issues grouped in the industry-wise indexes as securities information of the industry-wise indexes, deeming theme-wise indexes obtained by grouping issues by themes as single issues, and storing the averages of the securities information of the plurality of issues grouped in the theme-wise indexes as securities information of the theme-wise indexes.

16. A securities trading support system as set forth in claim 15, **characterized in that** said securities information support system is provided with an index editing unit for adding, deleting, and changing issues grouped in the industry-wise indexes or theme-wise indexes.

17. A securities trading support system **characterized by** being provided with:
a securities information storage unit for storing securities information of a plurality of issues and
a chart display unit for reading securities information from the securities information storage unit and displaying the read securities information as a chart,
the chart display unit displaying a chart of securities information corresponding to a date, displaying the securities information by weekly charts of week units, and displaying the securities information from the last week to the present day by daily charts of day units.

18. A securities trading support system as set forth in claim 5, **characterized in that** said pick unit prompts the user to select a pick criteria for picking up a "sell" candidate issue in advance and stores it in the purchased issue storage unit when the purchased issue storage unit manages and stores purchased issues.

19. A securities trading support system as set forth in claim 5, **characterized in that** said pick unit checks whether there is a purchased issue matching a pick criteria not selected by the user in the purchased issues and, when there is a purchased issue matching with a pick criteria not selected by the user, displays to the user the fact the purchased issue was selected by a pick criteria not selected by the user by a method separate from the method of displaying purchased issues matching pick criteria selected by the user.

20. A securities trading support system as set forth in claim 9, **characterized in that** said chart display unit displays data for analysis of fundamentals.

21. A securities trading support system as set forth in claim 2, **characterized in that** said screening unit uses a rate of change of a value dynamically changing along with the elapse of time as the screening criteria.

22. A securities trading support system as set forth in claim 21, **characterized in that** said screening unit uses as the screening criteria the rate of change of at least one of a share price fluctuation, share price level, recent price movement, moving average divergence, volume change, margin selling balance change, margin buying balance change, and margin share ratio.

23. A securities trading support method **characterized by**:
inputting securities information of a plurality of issues, extracting from the securities information of the plurality of issues an issue having securities information matching with a predetermined extraction criteria, and presenting the extracted issue to a user to prompt the user to select an issue to buy and
registering purchase information of an issue selected by a user, picking an issue to sell from registered issues based on purchase information of the registered issues and securities information of the registered issues, and presenting the picked issue to the user to prompt the user to select an issue to sell.

24. A securities trading support method **characterized by**:
storing securities information of a plurality of issues,
reading stored securities information, analyzing the read securities information based on a predetermined plurality of different extraction criteria, and extracting an issue matching with the plurality of extraction criteria as an extracted issue to be presented to a user,
storing extracted issues extracted,
prompting a user to select at least one extraction criteria from said plurality of extraction criteria, prompting the user to input a screening criteria for selecting an issue to buy from said extracted issues, reading an extracted issue matching with the extraction criteria selected by the user from stored extracted issues, reading securities information of the read extracted issue, screening the read securities information by a screening criteria input by the user, and selecting an issue matching with both the extraction criteria and screening criteria as a "buy" candidate issue of the user, and
storing selected "buy" candidate issues and providing stored "buy" candidate issues to the user.

25. A securities trading support method **characterized by**:
storing securities information of a plurality of issues,
receiving as input, managing, and storing purchased issues which have been already bought by a user as a portfolio,
prompting a user to select a pick criteria from a predetermined plurality of different pick criteria, reading purchased issues input, managed, and stored as a portfolio, reading securities information of the read purchased issues from the stored securities information, analyzing the read securities information based on the pick criteria selected by the user, and picking up an issue matching with the pick criteria as a "sell" candidate issue, and
storing picked up "sell" candidate issues and providing stored "sell" candidate issues to the user.

26. A computer readable storage medium storing a program for making a computer execute the securities trading support method as set forth in claim 23.

27. A computer readable storage medium storing a program for making a computer execute the securities trading support method as set forth in claim 24.

28. A computer readable storage medium storing a program for making a computer execute the securities trading support method as set forth in claim 25.

29. A securities trading support system for supporting the selection of an issue from securities information of a plurality of issues stored in a memory,
said securities trading support system **characterized by**:
dividing the plurality of issues into groups, finding rates of advance and rates of decline of the issues, calculating an average of the rates of advance and average of the rates of decline for each group, and storing in a memory the average of the rate of advance and average of the rate of decline as reference values,
prompting a user to select a group and prompting the user to designate a risk degree,
correcting reference values of a group selected by the user by the risk degree and storing the corrected reference values in the memory, and
screening for an issue matching with the corrected reference values from the securities information of the plurality of issues.

30. A securities trading support system as set forth in claim 29, **characterized in that** said groups are groups divided by size, industry, and price range.

31. A securities trading support system as set forth in claim 29, **characterized in that** said reference values are corrected to values smaller the larger the risk degree.

32. A securities trading support system for supporting the selection of an issue from securities information of a plurality of issues stored in a memory,
said securities trading support system **characterized by**:
changing the value of a parameter able to be used for calculating a technical indicator used for assessment of an issue within a predetermined range, calculating the value of the technical indicator and value of the assessment scope corresponding to the value of the parameter, and storing them in the memory, and
displaying on a display screen the value of the parameter used for calculation of the technical indicator and the value of the technical indicator calculated by the value of that parameter in the order of size of the assessment scope.

33. A securities trading support system as set forth in claim 32, **characterized in that** said technical indicator is at least one of an RSI, RCI, stochastic, psychological line, and volume ratio and **in that** said parameter is a "period" used for calculation of an "index" of the technical indicator.

34. A securities trading support system as set forth in claim 32, **characterized in that** said assessment scope is one of profit/loss, win rate, and number of wins.

35. A securities trading support system for supporting the selection of an issue from securities information of a plurality of issues stored in a memory,
said securities trading support system **characterized by** displaying on a display screen a distribution chart having as one axis of its orthogonal system a rate of advance and as the other axis a rate of decline, calculating a rate of advance and rate of decline of each issue, and plotting marks at corresponding positions of the distribution chart using the calculated rates of advance and rates of decline.

36. A securities trading support system as set forth in claim 35, **characterized in that** said rate of advance is the maximum rate of advance in a plurality of rates of advance calculated for a plurality of advancing trends appearing over a certain period and **in that** said rate of decline is the maximum rate of decline in a plurality of rates of decline calculated for a plurality of declining trends appearing over a certain period.

37. A securities trading support system as set forth in claim 35, **characterized by** selecting mark on the distribution chart displayed on the display screen to display on the display screen securities information of an issue having a rate of advance and rate of decline corresponding to that mark.
